# EUROPEAN PATENT SPECIFICATION

(11) **EP 4 345 971 B1**
(45) Date of publication and mention of the grant of the patent: **23.09.2026**
(21) Application number: 21942135.1
(22) Date of filing: 30.07.2021
(51) Int. Cl.: H01M 4/58, H01M 10/0569, H01M 10/0525, H01M 4/136, H01M 10/0567, H01M 10/0568, H01M 4/02, H01M 50/204

(54) **SECONDARY BATTERY AND BATTERY MODULE COMPRISING SAME, BATTERY PACK, AND ELECTRIC DEVICE**
SEKUNDÄRBATTERIE UND BATTERIEMODUL DAMIT, BATTERIEPACK UND ELEKTRISCHE VORRICHTUNG
BATTERIE SECONDAIRE ET MODULE DE BATTERIE LA COMPRENANT, BLOC-BATTERIE ET DISPOSITIF ÉLECTRIQUE

(43) Date of publication of application: 03.04.2024
(60) Divisional application: 26198688.9
(73) Proprietor: Contemporary Amperex Technology (Hong Kong) Limited, Hong Kong (HK)
(72) Inventor: HUANG, Lei, Ningde, Fujian 352100 (CN); HAN, Changlong, Ningde, Fujian 352100 (CN) (CN); WU, Zeli, Ningde, Fujian 352100 (CN) (CN); ZHANG, Cuiping, Ningde, Fujian 352100 (CN) (CN)
(74) Representative: Gong, Jinping
(86) International application number: PCT/CN2021/109903
(87) International publication number: WO 2023/004819

(56) References cited:
- EP-A1- 3 591 747
- CN-A- 102 315 485
- CN-A- 108 352 561
- CN-A- 108 878 956
- CN-A- 109 119 686
- CN-A- 111 261 931
- JP-A- 2019 040 676
- R BRDICKA ET AL: "Surface area and pore size determination Modern Methods in Heterogeneous Catalysis Research", HANDBOOK OF HETEROGENEOUS CATALYSIS, VCH, WEINHEIM HANDBOOK OF POROUS SOLIDS, 1 January 2004 (2004-01-01), XP055643749, Retrieved from the Internet <URL:http://www.fhi-berlin.mpg.de/acnew/department/pages/teaching/pages/teaching__wintersemester__2013_2014/annette_trunschke__surface_area_and_pore_analysis__131101.pdf> [retrieved on 20210720]

## Description

### TECHNICAL FIELD

This application relates to the technical field of secondary batteries, and specifically, to a secondary battery and a battery module, a battery pack, and an electric apparatus containing the secondary battery.

### BACKGROUND

Secondary batteries have occupied a large market share due to their characteristics such as good cycling performance, stable electrochemical performance, and low cost. With customers' increasingly high requirements for energy density of batteries, it is critical to develop batteries with higher energy density and longer cycling life. Currently, an effective method for improving energy density of a battery is to improve utilization of internal space of the battery, for example, to increase coating weight and compacted density of an electrode plate, but this causes disadvantages such as a longer migration path and a slower diffusion rate of active ions, which makes it difficult to deintercalate the active ions between a positive electrode and a negative electrode of the battery, thereby causing poorer kinetic performance of the battery.
EP3591747 describes a a lithium-ion secondary battery, which comprises a positive electrode plate, a negative electrode plate, a separator and an electrolyte.
JP2019040676 illustrates a non-aqueous electrolytic solution and a non-aqueous electrolytic solution secondary battery.

### SUMMARY

This application aims to provide a secondary battery and a battery module, a battery pack, and an electric apparatus containing the secondary battery as specified in any of claims 1-14, so that the secondary battery has good kinetic performance, a high capacity retention rate, and a low volume swelling ratio while maintaining high energy density.

A first aspect of this application provides a secondary battery, including a positive electrode plate and an electrolyte, where the positive electrode plate includes a positive electrode current collector and a positive electrode film layer arranged on at least one surface of the positive electrode current collector, and the positive electrode film layer includes one or more of olivine-structured lithium-containing phosphate and its modified compound. The electrolyte includes an organic solvent, and the organic solvent includes a first solvent represented by Formula 1.

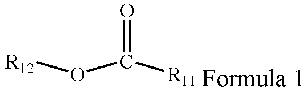

R₁₁ and R₁₂ in Formula 1 each are independently one of C1-C4 alkyl and C1-C4 haloalkyl.

The secondary battery in this application satisfies: mass of first solvent/rated capacity of secondary battery is ≥ 0.7 g/Ah; and mass of electrolyte/rated capacity of secondary battery is ≤ 3.5 g/Ah.

When the secondary battery in this application satisfies: the mass of the first solvent/the rated capacity of the secondary battery is ≥ 0.7 g/Ah and the mass of the electrolyte/the rated capacity of the secondary battery is ≤ 3.5 g/Ah, the electrolyte inside the battery can well infiltrate the positive electrode plate and a negative electrode plate, so that the first solvent improves kinetic performance of the battery to the maximum extent and irreversible consumption of active ions inside the battery can also be controlled within a small range. Therefore, the secondary battery can have good kinetic performance, a high capacity retention rate, and a low volume swelling ratio while maintaining the high energy density.

Optionally, mass of first solvent divided by rated capacity of secondary battery is greater than or equal to 1.0 g/Ah.

Optionally, the mass of the electrolyte divided by the rated capacity of the secondary battery ranges from 2.8 g/Ah to 3.3 g/Ah.

In the claimed embodiment of this application, the secondary battery further satisfies: proportion of first solvent/(thickness of positive electrode film layer × 3 + 0.008/porosity of positive electrode film layer) is ≥ 1. The proportion of the first solvent refers to a mass percentage of the first solvent in a total mass of the organic solvent. The thickness of the positive electrode film layer is a thickness of a positive electrode film layer on one surface of the positive electrode current collector, which is measured in mm. In this case, the problem of poor kinetic performance of the battery that is caused after coating weight and compacted density of the positive electrode film layer are increased can be effectively resolved.

Optionally, the secondary battery further satisfies: proportion of first solvent/(thickness of positive electrode film layer × 3 + 0.008/porosity of positive electrode film layer) is ≥ 1.5.

In any embodiment of this application, the electrolyte further includes an additive.

Optionally, reduction potential of the additive is greater than or equal to 0.8 V (vs Li⁺/Li). In this case, the additive can participate in an electrochemical reduction reaction prior to the organic solvent, to form a SEI membrane on a surface of a negative electrode active material, which promotes formation of the stable SEI membrane on the surface of the negative electrode active material and prevents the negative electrode active material from further reacting with the electrolyte, thereby reducing damage to the SEI membrane caused by protons generated during the reduction of the first solvent.

In any embodiment of this application, the additive includes an organic additive, and the organic additive includes one or more of vinylene carbonate, fluoroethylene carbonate, vinyl ethylene carbonate, ethylene sulfate, and 1,3-propane sultone. The organic additive can priorly participate in electrochemical reduction on the surface of the negative electrode active material to form the SEI membrane with excellent performance, thereby reducing the damage to the SEI membrane caused by the protons generated during the reduction of the first solvent. Reduction products of the organic additive are mainly organic components, and these organic components can improve mechanical stability of the SEI membrane, which helps improve cycling performance of the battery.

In any embodiment of this application, the additive includes an inorganic additive, and the inorganic additive includes one or more of tris(trimethylsilyl) phosphate, lithium bis(oxalate)borate, lithium bis[ethanedioato(2-)-κO1,κO2]difluorophosphate(1-), lithium tetrafluoro(oxalato)phosphate, lithium difluoro(oxalato)borate, and lithium difluorophosphate. The inorganic additive can priorly participate in electrochemical reduction on the surface of the negative electrode active material to form the SEI membrane with excellent performance, thereby reducing the damage to the SEI membrane caused by the protons generated during the reduction of the first solvent. Reduction products of the inorganic additive are mainly inorganic components, and these inorganic components can improve thermal stability of the SEI membrane, which helps improve high-temperature performance of the battery.

In any embodiment of this application, a mass percentage of the organic additive in a total mass of the additive is greater than or equal to 50%. Optionally, the mass percentage of the organic additive ranges from 70% to 100%.

In any embodiment of this application, a mass percentage of the inorganic additive in a total mass of the additive is less than or equal to 50%. Optionally, the mass percentage of the inorganic additive ranges from 0% to 30%.

In any embodiment of this application, the secondary battery further includes a negative electrode plate, and the negative electrode plate includes a negative electrode active material.

In any embodiment of this application, the secondary battery further satisfies: (electrolyte retention coefficient × proportion of additive)/(relative mass of negative electrode × specific surface area of negative electrode active material × 0.012 + electrolyte retention coefficient × proportion of first solvent × 0.03) is ≥ 1. In this case, the additive can effectively protect the negative electrode interface and suppress an aggravation problem of a side reaction at the negative electrode interface caused due to instability of the first solvent, and therefore, the secondary battery has a higher capacity retention rate and a lower volume swelling ratio during use. The electrolyte retention coefficient refers to a quotient calculated by dividing the mass of the electrolyte by the rated capacity of the secondary battery, and is measured in g/Ah; the proportion of the additive refers to a mass percentage of the additive in a total mass of the electrolyte; the relative mass of the negative electrode refers to a quotient calculated by dividing a mass of the negative electrode active material in the negative electrode plate by the rated capacity of the secondary battery, and is measured in g/Ah; and the specific surface area of the negative electrode active material is measured in m²/g.

Optionally, the secondary battery further satisfies: (electrolyte retention coefficient × proportion of additive)/(relative mass of negative electrode × specific surface area of negative electrode active material × 0.012 + electrolyte retention coefficient × proportion of first solvent × 0.03) is ≥ 2.

In any embodiment of this application, the thickness of the positive electrode film layer is greater than or equal to 0.07 mm. Optionally, the thickness of the positive electrode film layer ranges from 0.07 mm to 0.14 mm. The positive electrode film layer has a moderate thickness, a migration path of the active ions in the positive electrode film layer is moderate, and therefore, the battery can maintain the good kinetic performance without dispensing with excessive energy density of the battery.

In any embodiment of this application, the porosity of the positive electrode film layer is less than or equal to 50%. Optionally, the porosity of the positive electrode film layer ranges from 5% to 50%. The positive electrode film layer has moderate porosity, migration hindrance of the active ions in the positive electrode film layer is moderate, and therefore, the battery can maintain the good kinetic performance without dispensing with excessive energy density of the battery.

In any embodiment of this application, the relative mass of the negative electrode is less than or equal to 2.1 g/Ah. Optionally, the relative mass of the negative electrode ranges from 1.2 g/Ah to 2.1 g/Ah.

In any embodiment of this application, the specific surface area of the negative electrode active material ranges from 0.5 m²/g to 6.0 m²/g. Optionally, the specific surface area of the negative electrode active material ranges from 1.0 m²/g to 3.2 m²/g.

In any embodiment of this application, the proportion of the first solvent is greater than or equal to 50%. Optionally, the proportion of the first solvent ranges from 50% to 80%. The proportion of the first solvent is moderate, and therefore, not only the kinetic performance of the battery can be improved to the maximum extent, but also excessive damage to the negative electrode interface can be avoided.

In any embodiment of this application, the proportion of the additive is greater than or equal to 3%. Optionally, the proportion of the additive ranges from 3% to 9%. The proportion of the additive is moderate, and therefore, not only the negative electrode interface can be protected to the maximum extent, but also formation of an excessively thick SEI membrane on the surface of the negative electrode active material and an increase in membrane-forming impedance at the negative electrode can be avoided.

In any embodiment of this application, R₁₁ and R₁₂ in Formula 1 each are independently one of methyl, ethyl, propyl, butyl, fluoromethyl, fluoroethyl, fluoropropyl, and fluorobutyl. When R₁₁ and R₁₂ are selected from the foregoing groups, viscosity of the electrolyte may remain in a proper range, and the electrolyte has higher conductivity.

In any embodiment of this application, the first solvent represented by Formula 1 is selected from one or more of the following compounds: 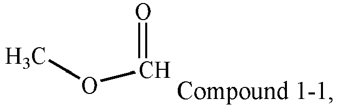 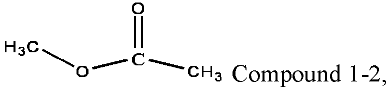 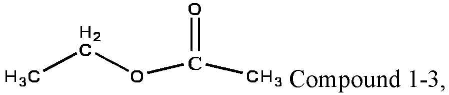 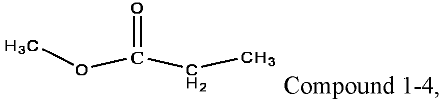 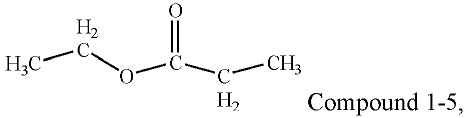 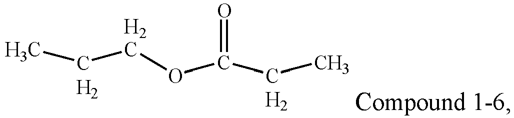 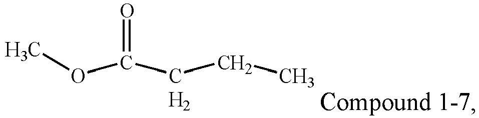 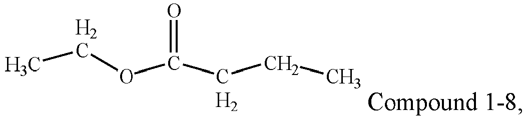 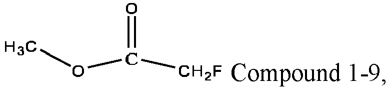 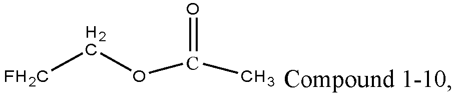 and

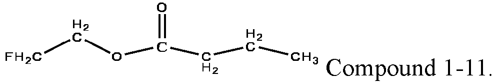

In any embodiment of this application, the organic solvent further includes one or more of a second solvent represented by Formula 2 and a third solvent represented by Formula 3, R₂₁ in Formula 2 is one of H, methyl, and ethyl, and R₃₁ and R₃₂ in Formula 3 each are independently one of methyl, ethyl, and propyl.

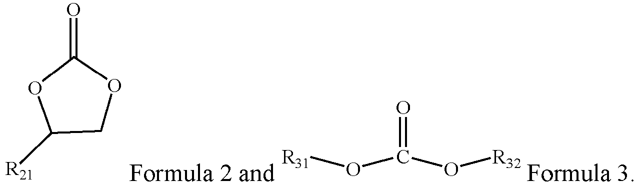

In any embodiment of this application, a mass percentage of the second solvent in a total mass of the organic solvent is greater than or equal to 10%. Optionally, the mass percentage of the second solvent ranges from 10% to 80%. The second solvent has a high dielectric constant, which facilitates dissociation of lithium salt, and therefore, adding the second solvent to the electrolyte helps increase conductivity of the electrolyte.

In any embodiment of this application, a mass percentage of the third solvent in the total mass of the organic solvent is greater than or equal to 0%. Optionally, the mass percentage of the third solvent ranges from 5% to 80%. The third solvent has a smaller dielectric constant, and has weak capability of dissociating the lithium salt, but has small viscosity and good fluidity, and therefore, after the third solvent is added to the electrolyte, the migration rate of the active ions can be increased, to increase the conductivity of the electrolyte.

In any embodiment of this application, the second solvent represented by Formula 2 is selected from one or two of the following compounds:

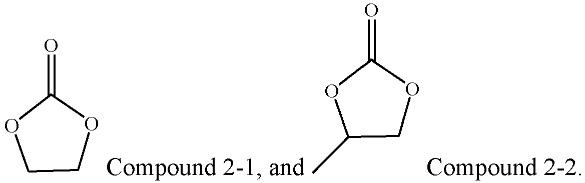

In any embodiment of this application, the third solvent represented by Formula 3 is selected from one or more of the following compounds: 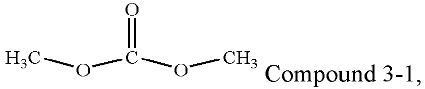 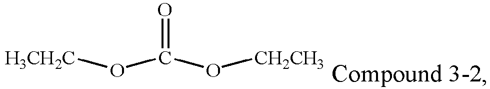 and

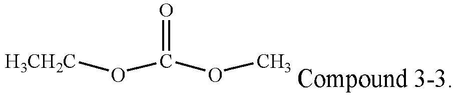

In any embodiment of this application, the olivine-structured lithium-containing phosphate includes one or more of lithium iron phosphate, a composite material of lithium iron phosphate and carbon, lithium manganese phosphate, a composite material of lithium manganese phosphate and carbon, lithium manganese iron phosphate, a composite material of lithium manganese iron phosphate and carbon, and their respective modified compounds.

A second aspect of this application provides a battery module, including the secondary battery according to the first aspect of this application.

A third aspect of this application provides a battery pack, including one of the secondary battery according to the first aspect of this application and the battery module according to the second aspect of this application.

A fourth aspect of this application provides an apparatus, including at least one of the secondary battery according to the first aspect of this application, the battery module according to the second aspect of this application, and the battery pack according to the third aspect of this application.

The battery module, the battery pack, and the electric apparatus in this application include the secondary battery provided in this application, and therefore have at least the same advantages as the secondary battery.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and a person of ordinary skills in the art may still derive other drawings from the accompanying drawings without creative efforts.
FIG. 1 is a schematic diagram of an embodiment of a secondary battery in this application.
FIG. 2 is a schematic exploded view of an embodiment of a secondary battery in this application.
FIG. 3 is a schematic diagram of an embodiment of a battery module in this application.
FIG. 4 is a schematic diagram of an embodiment of a battery pack in this application.
FIG. 5 is an exploded view of FIG. 4.
FIG. 6 is a schematic diagram of an embodiment of an electric apparatus using a secondary battery as a power source in this application.

### DESCRIPTION OF EMBODIMENTS

Embodiments of a secondary battery and a battery module, a battery pack, and an electric apparatus containing the secondary battery in this application are described in detail and specifically disclosed below with reference to the accompanying drawings as appropriate. However, in some cases, unnecessary detailed descriptions may be omitted. For example, in some cases, detailed descriptions of well-known items or repeated descriptions of actually identical structures may be omitted. This is to avoid unnecessary verbosity of the following descriptions and to facilitate understanding by a person skilled in the art. In addition, the accompanying drawings and the following descriptions are provided for a person skilled in the art to fully understand this application, and are not intended to limit the subject described in the claims.

"Ranges" disclosed in this application are defined in the form of lower and upper limits, given ranges are defined by selecting lower and upper limits, and the selected lower and upper limits define boundaries of special ranges. Ranges defined in the method may or may not include end values, and any combination may be used, that is, any lower limit may be combined with any upper limit to form a range. For example, if ranges of 60 to 120 and 80 to 110 are provided for a specific parameter, it should be understood that ranges of 60 to 110 and 80 to 120 are also predictable. In addition, if minimum values of a range are set to 1 and 2, and maximum values of the range are set to 3, 4, and 5, the following ranges are all predictable: 1 to 3, 1 to 4, 1 to 5, 2 to 3, 2 to 4, and 2 to 5. In this application, unless otherwise stated, a value range of "a to b" represents an abbreviated representation of any combination of real numbers between a and b, where both a and b are real numbers. For example, a value range of "0 to 5" means that all real numbers from "0 to 5" are listed herein, and "0-5" is just an abbreviated representation of a combination of these values. In addition, when a parameter is represented by an integer greater than or equal to 2, this is equivalent to disclosure that the parameter is, for example, an integer: 2, 3, 4, 5, 6, 7, 8, 9, 10, 11, 12, or the like.

Unless otherwise specified, all the embodiments and optional embodiments of this application may be mutually combined to form a new technical solution.

Unless otherwise specified, all the technical features and optional technical features of this application may be mutually combined to form a new technical solution.

Unless otherwise specified, all the steps in this application may be performed sequentially or randomly, or preferably, is performed sequentially. For example, when a method includes steps (a) and (b), this indicates that the method may include steps (a) and (b) performed in sequence, or may include steps (b) and (a) performed in sequence. For example, when the foregoing method may further include step (c), this indicates that step (c) may be added to the method in any order, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, the "include" and "contain" may mean that other unlisted components may also be included or contained, or only listed components may be included or contained.

Unless otherwise specified, in this application, the term "or" is inclusive. For example, a phrase "A or B" means "A, B, or both A and B". More specifically, any of the following conditions satisfies the condition "A or B": A is true (or present) and B is false (or not present); A is false (or not present) and B is true (or present); or both A and B are true (or present).

### Secondary battery

The secondary battery, also referred to as a rechargeable battery or a storage battery, is a battery whose active material can be activated for continuous use through charging after the battery is discharged.

Usually, the secondary battery includes a positive electrode plate, a negative electrode plate, a separator, and an electrolyte. During a charging and discharging process of the battery, active ions migrate between the positive electrode plate and the negative electrode plate for intercalation and deintercalation. The separator is arranged between the positive electrode plate and the negative electrode plate, to mainly prevent a short circuit between positive and negative electrodes and to allow the active ions to pass through. The electrolyte conducts the active ions between the positive electrode plate and the negative electrode plate.

In the secondary battery in this application, the positive electrode plate includes a positive electrode current collector and a positive electrode film layer arranged on at least one surface of the positive electrode current collector. For example, the positive electrode current collector has two back-to-back surfaces in its thickness direction, and the positive electrode film layer is arranged on either or both of the two back-to-back surfaces of the positive electrode current collector.

In the secondary battery in this application, the positive electrode film layer includes a positive electrode active material. In an example, the positive electrode active material may include one or more of lithium transition metal oxide, olivine-structured lithium-containing phosphate, and their respective modified compounds. Examples of the lithium transition metal oxide may include but are not limited to one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and their modified compounds. Examples of the olivine-structured lithium-containing phosphate may include but are not limited to one or more of lithium iron phosphate, a composite material of lithium iron phosphate and carbon, lithium manganese phosphate, a composite material of lithium manganese phosphate and carbon, lithium manganese iron phosphate, a composite material of lithium manganese iron phosphate and carbon, and their respective modified compounds. One type of these positive electrode active materials may be used alone, or two or more types may be used in combination.

In some embodiments, the positive electrode active material may include at least one or more of olivine-structured lithium-containing phosphate and its modified compound.

In some embodiments, the positive electrode active material may be only one or more of olivine-structured lithium-containing phosphate and its modified compound.

In the secondary battery in this application, the modified compounds of the positive electrode active materials may be obtained by subjecting the positive electrode active materials to doping modification, surface coating modification, or both doping modification and surface coating modification.

In the secondary battery in this application, the positive electrode film layer usually includes the positive electrode active material and optionally, a binder and optionally, a conductive agent. The positive electrode film layer is usually formed by applying a positive electrode slurry onto the positive electrode current collector, followed by drying and cold pressing. The positive electrode slurry is usually formed by dispersing the positive electrode active material, and optionally the conductive agent, optionally the binder, and any other component in a solvent and stirring them uniformly. The solvent may be but is not limited to N-methylpyrrolidone (NMP). In an example, the binder applied to the positive electrode film layer may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin. In an example, the conductive agent applied to the positive electrode film layer may include one or more of superconducting carbon, acetylene black, carbon black, Ketjen black, carbon dots, carbon nanotubes, graphene, and carbon nanofibers.

In the secondary battery in this application, metal foil or a composite current collector may be used as the positive electrode current collector. In an example of the metal foil, aluminum foil may be used. The composite current collector may include a polymer material matrix and a metal material layer formed on at least one surface of the polymer material matrix. In an example, a metal material may be selected from one or more of aluminum, aluminum alloy, nickel, nickel alloy, titanium, titanium alloy, silver and silver alloy. In an example, the polymer material matrix may be selected from polypropylene (PP), polyethylene terephthalate (PET), polybutylene terephthalate (PBT), polystyrene (PS), polyethylene (PE), and the like.

In the secondary battery in this application, the negative electrode plate includes a negative electrode current collector and a negative electrode film layer arranged on at least one surface of the negative electrode current collector. For example, the negative electrode current collector has two back-to-back surfaces in its thickness direction, and the negative electrode film layer is arranged on either or both of the two back-to-back surfaces of the negative electrode current collector.

The negative electrode active material may be a well-known negative electrode active material used for a secondary battery in the art. In an example, the negative electrode active material may include one or more of natural graphite, artificial graphite, soft carbon, hard carbon, a silicon-based material, a tin-based material, and lithium titanate. The silicon-based material may include one or more of elemental silicon, silicon oxide, a silicon-carbon composite, a silicon-nitride composite, or a silicon alloy material. The tin-based material may include one or more of elemental tin, tin oxide, and a tin alloy material. This application imposes no limitation on these materials, and other conventional well-known materials that can be used as the negative electrode active material for the secondary battery may also be used. One type of these negative electrode active materials may be used alone, or two or more types may be used in combination.

In the secondary battery in this application, the negative electrode film layer usually includes a negative electrode active material, and optionally a binder, optionally a conductive agent, and optionally another adjuvant. The negative electrode film layer is usually formed by applying a negative electrode slurry onto the negative electrode current collector, followed by drying and cold pressing. The negative electrode slurry is usually formed by dispersing the negative electrode active material, and optionally, the conductive agent, optionally, the binder, and optionally, another adjuvant in a solvent and stirring them evenly. The solvent may be but is not limited to N-methylpyrrolidone (NMP) or deionized water. In an example, the conductive agent may include one or more of superconducting carbon, acetylene black, carbon black, Ketjen black, carbon dots, carbon nanotubes, graphene, and carbon nanofibers. In an example, the binder may include one or one of styrene-butadiene rubber (SBR), water-soluble unsaturated resin SR-1B, water-borne acrylic resin (for example, polyacrylic acid PAA, poly(methyl acrylic acid) PMAA, and sodium polyacrylate PAAS), polyacrylamide (PAM), polyvinyl alcohol (PVA), sodium alginate (SA), and carboxymethyl chitosan (CMCS). The another optional adjuvant may include a thickener (for example, sodium carboxymethyl cellulose CMC-Na) and a PTC thermistor material.

In the secondary battery in this application, metal foil or a composite current collector may be used as the negative electrode current collector. In an example of the metal foil, copper foil may be used. The composite current collector may include a polymer material matrix and a metal material layer formed on at least one surface of the polymer material matrix. In an example, the metal material may be selected from one or more of copper, copper alloy, nickel, nickel alloy, titanium, titanium alloy, silver, and silver alloy. In an example, the polymer material matrix may be selected from polypropylene (PP), polyethylene terephthalate (PET), polybutylene terephthalate (PBT), polystyrene (PS), polyethylene (PE), and the like.

In the battery field, the electrolyte may be selected from at least one of a solid-state electrolyte, a gel electrolyte, and a liquid-state electrolyte (namely, an electrolyte solution). The liquid-state electrolyte may be applied to the secondary battery in this application, namely, the electrolyte solution.

In the secondary battery in this application, the electrolyte solution may include an organic solvent and optionally, an additive. The organic solvent in this application is a non-aqueous organic solvent, and the organic solvent may include a first solvent represented by Formula 1.

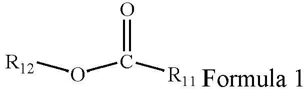

R₁₁ and R₁₂ in Formula 1 each are independently one of C1-C4 alkyl and C1-C4 haloalkyl, and R₁₁ and R₁₂ may be the same or different. Alkyl and haloalkyl substituents may be of a straight-chain structure or a branched-chain structure. The haloalkyl substituent may include one or more halogen atoms; and when the haloalkyl substituent includes a plurality of halogen atoms, these halogen atoms may be identical or different.

Usually, the battery cannot have both high energy density and good kinetic performance. Increasing coating weight and compacted density of the positive electrode film layer can improve the energy density of the battery, but also causes poor kinetic performance of the battery. Adding the first solvent represented by Formula 1 to the electrolyte can improve kinetic performance of the electrolyte and the kinetic performance of the battery. This is because the first solvent represented by Formula 1 has advantages of low viscosity and a high dielectric constant, which can greatly improve conductivity of the electrolyte.

Usually, the higher the proportion of the electrolyte in the battery, the better the battery performance. However, the inventor has found that when the positive electrode plate includes the olivine-structured lithium-containing phosphate and its modified compound, as a volume of injected electrolyte is increased within a specific range, the electrolyte better infiltrates inside of the battery, and the kinetic performance of the battery is also improved. However, if the volume of injected electrolyte is then further increased, the kinetic performance of the battery cannot be significantly improved; and if the volume of injected electrolyte is further increased, the proportion of the organic solvent inside the battery is also increased, and a part of the organic solvent consumes active ions, thereby accelerating decay of the battery capacity and increasing gassing of the battery.

The inventor has also found that, in the battery mainly using the olivine-structured lithium-containing phosphate and its modified compound as the positive electrode active material, when a mass of the first solvent divided by rated capacity of the secondary battery is greater than or equal to 0.7 g/Ah and a mass of the electrolyte divided by the rated capacity of the secondary battery is less than or equal to 3.5 g/Ah, the battery can have good kinetic performance, a high capacity retention rate, and a low volume swelling ratio while maintaining the high energy density. This is probably because the battery mainly using the olivine-structured lithium-containing phosphate and its modified compound as the positive electrode active material has low energy density. To further improve the energy density of the battery, an effective method is to improve internal space utilization of the battery. For example, when the coating weight and compacted density of the electrode plate are increased, there is extremely small residue space inside the battery. When the proportion of the electrolyte is increased, the gassing inside the battery is also easily increased. Therefore, the battery mainly using the olivine-structured lithium-containing phosphate and its modified compound as the positive electrode active material is more sensitive to the proportion of the electrolyte. In addition, to improve the kinetic performance of the electrolyte and the kinetic performance of the battery, the foregoing first solvent is usually used in the electrolyte. However, the first solvent has poor oxidation resistance and is easy to oxidize and dissociate, which increases internal gassing of the battery. Therefore, for the battery mainly using the olivine-structured lithium-containing phosphate and its modified compound as the positive electrode active material, proportions of the electrolyte and the first solvent inside the battery should be strictly controlled.

After extensive study, the inventor has found that when the battery satisfies that the mass of the first solvent divided by the rated capacity of the secondary battery is greater than or equal to 0.7 g/Ah and that the mass of the electrolyte divided by the rated capacity of the secondary battery is less than or equal to 3.5 g/Ah, the electrolyte inside the battery can well infiltrate the positive electrode plate and the negative electrode plate, so that the first solvent improves the kinetic performance of the battery to the maximum extent and irreversible consumption of the active ions inside the battery can also be controlled within a small range. Therefore, the secondary battery can have good kinetic performance, a high capacity retention rate, and a low volume swelling ratio while maintaining the high energy density.

The "battery mainly using the olivine-structured lithium-containing phosphate and its modified compound as the positive electrode active material" indicates that not only the positive electrode active material may be the olivine-structured lithium-containing phosphate and its modified compound, but also the positive electrode active material may be a combination of the olivine-structured lithium-containing phosphate and its modified compound with another positive electrode active material. That is, the positive electrode active material further includes another positive electrode active material such as lithium transition metal oxide and its modified compound, in addition to the olivine-structured lithium-containing phosphate and its modified compound. In some embodiments, a mass percentage of the olivine-structured lithium-containing phosphate and its modified compound in a total mass of the positive electrode active material may be greater than or equal to 50%. Optionally, the mass percentage of the olivine-structured lithium-containing phosphate and its modified compound ranges from 80% to 100%.

In the secondary battery in this application, the mass of the electrolyte refers to a mass of an electrolyte inside a finished battery, rather than a mass of an electrolyte injected during preparation of the battery.

In the secondary battery in this application, the rated capacity of the secondary battery refers to capacity released after the battery fully charged at room temperature is discharged at a current of 1/3 × I₁ (A) and reaches an end voltage, and I₁ represents a 1-hour rate discharge current. For details, refer to Standard GB/T 31484-2015 in PRC: Cycle Life Requirements and Test Methods for Traction Battery of Electric Vehicle.

In the secondary battery in this application, a quotient calculated by dividing the mass of the electrolyte by the rated capacity of the secondary battery may also be referred to as the electrolyte retention coefficient.

In some embodiments, the mass of the first solvent divided by the rated capacity of the secondary battery may be greater than or equal to 0.7 g/Ah, 0.8 g/Ah, 0.9 g/Ah, 1.0 g/Ah, 1.1 g/Ah, 1.2 g/Ah, 1.3 g/Ah, 1.4 g/Ah, 1.5 g/Ah, 1.6 g/Ah, 1.7 g/Ah, 1.8 g/Ah, or 1.9 g/Ah.

In some embodiments, the mass of the first solvent divided by the rated capacity of the secondary battery may range from 0.7 g/Ah to 2.0 g/Ah, from 0.8 g/Ah to 2.0 g/Ah, from 0.9 g/Ah to 2.0 g/Ah, from 1.0 g/Ah to 2.0 g/Ah, from 1.1 g/Ah to 2.0 g/Ah, from 1.2 g/Ah to 2.0 g/Ah, from 1.5 g/Ah to 2.0 g/Ah, from 0.7 g/Ah to 1.9 g/Ah, from 0.8 g/Ah to 1.9 g/Ah, from 0.9 g/Ah to 1.9 g/Ah, from 1.0 g/Ah to 1.9 g/Ah, from 1.1 g/Ah to 1.9 g/Ah, from 1.2 g/Ah to 1.9 g/Ah, from 1.5 g/Ah to 1.9 g/Ah, from 0.7 g/Ah to 1.6 g/Ah, from 0.8 g/Ah to 1.6 g/Ah, from 0.9 g/Ah to 1.6 g/Ah, from 1.0 g/Ah to 1.6 g/Ah, from 1.1 g/Ah to 1.6 g/Ah, from 1.2 g/Ah to 1.6 g/Ah, or from 1.5 g/Ah to 1.6 g/Ah.

In some embodiments, the mass of the electrolyte divided by the rated capacity of the secondary battery may be less than or equal to 3.5 g/Ah, 3.4 g/Ah, 3.3 g/Ah, 3.2 g/Ah, 3.1 g/Ah, 3.0 g/Ah, 2.9 g/Ah, 2.8 g/Ah, 2.7 g/Ah, 2.6 g/Ah, 2.5 g/Ah, 2.4 g/Ah, 2.3 g/Ah, 2.2 g/Ah, 2.1 g/Ah, or 2.0 g/Ah.

In some embodiments, the mass of the electrolyte divided by the rated capacity of the secondary battery may range from 2.4 g/Ah to 3.5 g/Ah, from 2.5 g/Ah to 3.5 g/Ah, from 2.6 g/Ah to 3.5 g/Ah, from 2.7 g/Ah to 3.5 g/Ah, from 2.8 g/Ah to 3.5 g/Ah, from 2.9 g/Ah to 3.5 g/Ah, from 3.0 g/Ah to 3.5 g/Ah, from 3.1 g/Ah to 3.5 g/Ah, from 2.4 g/Ah to 3.3 g/Ah, from 2.5 g/Ah to 3.3 g/Ah, from 2.6 g/Ah to 3.3 g/Ah, from 2.7 g/Ah to 3.3 g/Ah, from 2.8 g/Ah to 3.3 g/Ah, from 2.9 g/Ah to 3.3 g/Ah, from 3.0 g/Ah to 3.3 g/Ah, or from 3.1 g/Ah to 3.3 g/Ah.

In some embodiments, R₁₁ and R₁₂ in Formula 1 each may be independently one of methyl, ethyl, propyl, butyl, fluoromethyl, fluoroethyl, fluoropropyl, and fluorobutyl. R₁₁ and R₁₂ may be the same or different. There may be one or more fluorine atoms. When R₁₁ and R₁₂ are selected from the foregoing groups, viscosity of the electrolyte may remain in a proper range, and the electrolyte has higher conductivity.

In some embodiments, in an example, the first solvent represented by Formula 1 may be selected from one or more of the following compounds: 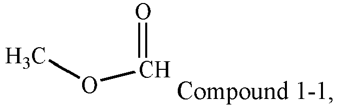 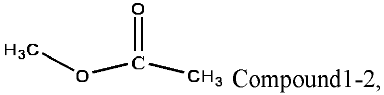 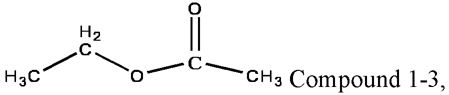 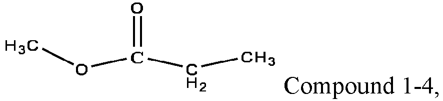 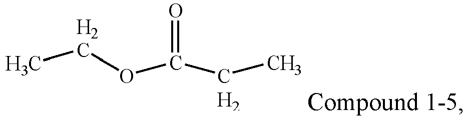 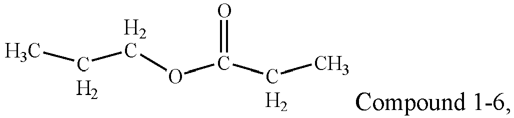 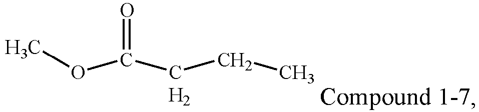 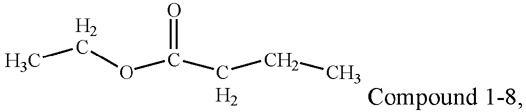 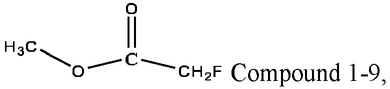 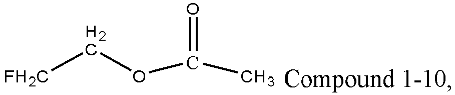 and

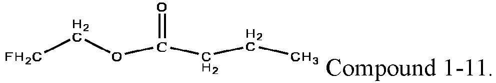

The first solvent represented by Formula 1 has advantages of low viscosity and a high dielectric constant, which can improve conductivity of the electrolyte, thereby alleviating a problem of poor kinetic performance of the battery to some extent that is caused after the coating weight and compacted density of the positive electrode film layer are increased. However, the inventor has also found that the first solvent represented by Formula 1 is not stable at the negative electrode, and is easily reduced to generate protons and another product, thereby increasing gassing of the battery. The protons generated after the reduction of the first solvent represented by Formula 1 also dissociate components such as lithium carbonate and lithium alkoxide in an SEI membrane, which deteriorates stability of the SEI membrane. In this way, the SEI membrane needs to be continuously repaired during the use of the battery, and such repair process consumes more active ions, which increases irreversible consumption of the active ions, thereby accelerating decay of the capacity of the battery. In addition, a product obtained after the reduction of the first solvent represented by Formula 1 accumulates on a surface of the negative electrode active material, which further extends a migration path of the active ions and reduces a migration rate of the active ions, thereby also deteriorating the kinetic performance of the negative electrode plate and the kinetic performance of the battery.

After extensive study, the inventor has found a solution to the foregoing problem, which not only ensures the high energy density and the good kinetic performance of the battery, but also ensures that the battery has good cycling performance and storage performance.

To improve the energy density of the battery, the coating weight and compacted density of the positive electrode film layer are usually increased, which causes a problem that the positive electrode film layer has an increasingly high requirement for the kinetic performance of the electrolyte. The thicker the positive electrode film layer, the longer the migration path of the active ions, and the higher the requirement for the kinetic performance of the electrolyte. The smaller the porosity of the positive electrode film layer, the greater the hindrance during migration of the active ions, and the higher the requirement for the kinetic performance of the electrolyte. Therefore, the foregoing two parameters of the positive electrode film layer are independent of each other, and both impose specific requirements on the kinetic performance of the electrolyte. After extensive study and tests, the inventor has obtained coefficients of these two independent requirements, and used a sum of the two coefficients to represent a total requirement for the kinetic performance of the electrolyte. The proportion of the first solvent is strongly related to the kinetic performance of the electrolyte. The higher the proportion of the first solvent, the better the kinetic performance of the electrolyte. The inventor has found that the proportion of the first solvent can be used to characterize a kinetic performance level of the electrolyte. In addition, the problem of the poor kinetic performance of the battery that is caused after the coating weight and the compacted density of the positive electrode film layer are increased can be effectively improved only when the kinetic performance level of the electrolyte is greater than or equal to the total requirement of the positive electrode film layer for the kinetic performance of the electrolyte.

After extensive study, the inventor has found that when the secondary battery further satisfies: proportion of first solvent/(thickness of positive electrode film layer × 3 + 0.008/porosity of positive electrode film layer) is ≥ 1, the problem of the poor kinetic performance of the battery that is caused after the coating weight and the compacted density of the positive electrode film layer are increased can be effectively resolved.

In some embodiments, the secondary battery may satisfy: proportion of first solvent/(thickness of positive electrode film layer × 3 + 0.008/porosity of positive electrode film layer) is ≥ 1.1, proportion of first solvent/(thickness of positive electrode film layer × 3 + 0.008/porosity of positive electrode film layer) is ≥ 1.2, proportion of first solvent/(thickness of positive electrode film layer × 3 + 0.008/porosity of positive electrode film layer) is ≥ 1.3, proportion of first solvent/(thickness of positive electrode film layer × 3 + 0.008/porosity of positive electrode film layer) is ≥ 1.4, proportion of first solvent/(thickness of positive electrode film layer × 3 + 0.008/porosity of positive electrode film layer) is ≥ 1.5, proportion of first solvent/(thickness of positive electrode film layer × 3 + 0.008/porosity of positive electrode film layer) is ≥ 1.6, proportion of first solvent/(thickness of positive electrode film layer × 3 + 0.008/porosity of positive electrode film layer) is ≥ 1.7, or proportion of first solvent/(thickness of positive electrode film layer × 3 + 0.008/porosity of positive electrode film layer) is ≥ 1.8.

The proportion of the first solvent refers to a mass percentage of the first solvent in a total mass of the organic solvent.

The thickness of the positive electrode film layer is a thickness of a positive electrode film layer on one surface of the positive electrode current collector, which is measured in mm. When the positive electrode film layer is arranged on either of the two back-to-back surfaces of the positive electrode current collector, thickness of positive electrode film layer = thickness of positive electrode plate - thickness of positive electrode current collector; or when positive electrode film layers are both arranged on the two back-to-back surfaces of the positive electrode current collector, thickness of positive electrode film layer = (thickness of positive electrode plate - thickness of positive electrode current collector)/2. In this application, a micrometer may be used for thickness measurement. For example, a micrometer with a model of Mitutoyo 293-100 and resolution of 0.1 µm may be used. In this application, the "thickness of the positive electrode film layer" refers to a thickness of the single-sided positive electrode film layer, and the "total thickness of the positive electrode film layers" refers to a sum of thicknesses of the positive electrode film layers when the positive electrode film layers are both arranged on the two opposite surfaces of the positive electrode current collector.

The porosity of the positive electrode film layer is represented by a quotient calculated by dividing a pore volume of the positive electrode plate (that is, a true volume of the positive electrode plate) by an apparent volume of the positive electrode plate. The porosity of the positive electrode film layer may be measured with reference to GB/T 24586-2009: Iron Ores - Determination of Apparent Density, True Density and Porosity. The measurement method includes the following steps: 30 wafers with a diameter of 14 mm are cut from the positive electrode plate, and based on a principle of gas adsorption, inert gas (for example, helium or nitrogen) is used as a medium to measure true volumes of these 30 wafers with the diameter of 14 mm; and the apparent volume of the positive electrode plate is calculated based on areas, thicknesses and the quantity of the wafers, and a quotient calculated by dividing the true volume by the apparent volume is the porosity of the positive electrode film layer.

Surfaces of the olivine-structured lithium-containing phosphate and its modified compound include polar functional groups and have large specific surface areas, and are easy to absorb water, and a drying process before solution injection into the battery cannot completely remove the contained water. During the use of the battery, the water gradually diffuses into the electrolyte and reacts with the electrolyte, and the water also damages the SEI membrane (Solid Electrolyte Interface Membrane) on a surface of a negative electrode active material, thereby affecting stability of a negative electrode interface.

The thickness of the positive electrode film layer is reduced, a migration path of the active ions in the positive electrode film layer is shortened, and the kinetic performance of the secondary battery is improved; and water in the positive electrode film layer is also easier to remove in the drying process, and damage caused by the water to the negative electrode interface is reduced. However, as the thickness of the positive electrode film layer is reduced, the energy density of the secondary battery is also reduced. In some embodiments, the thickness of the positive electrode film layer may be greater than or equal to 0.07 mm. For example, the thickness of the positive electrode film layer may be greater than or equal to 0.075 mm, 0.08 mm, 0.085 mm, 0.09 mm, 0.10 mm, 0.11 mm, 0.12 mm, 0.13 mm, 0.14 mm, or 0.15 mm.

In some embodiments, optionally, the thickness of the positive electrode film layer may range from 0.07 mm to 0.14 mm. More specifically, the thickness of the positive electrode film layer may range from 0.09 mm to 0.12 mm.

The porosity of the positive electrode film layer is increased, the electrolyte is easier to infiltrate the positive electrode film layer, migration hindrance of the active ions in the positive electrode film layer is reduced, and the kinetic performance of the secondary battery is improved; and water in the positive electrode film layer is also easier to remove in the drying process, and damage caused by the water to the negative electrode interface is reduced. However, the porosity of the positive electrode film layer is increased, and the energy density of the secondary battery is reduced. In some embodiments, the porosity of the positive electrode film layer may be less than or equal to 50%. For example, the porosity of the positive electrode film layer may be less than or equal to 48%, 45%, 42%, 40%, 38%, 37%, 35%, 32%, or 30%.

In some embodiments, optionally, the porosity of the positive electrode film layer may range from 5% to 50%. More specifically, the porosity of the positive electrode film layer may range from 20% to 40%.

In some embodiments, single-sided coating weight of the positive electrode film layer may be greater than or equal to 20 mg/cm². Optionally, the single-sided coating weight of the positive electrode film layer may range from 23 mg/cm² to 29 mg/cm². More specifically, the single-sided coating weight of the positive electrode film layer may range from 25 mg/cm² to 29 mg/cm².

In some embodiments, the compacted density of the positive electrode film layer may be greater than or equal to 2.1 g/cm³. Optionally, the compacted density of the positive electrode film layer may range from 2.1 g/cm³ to 2.8 mg/cm³. More specifically, the compacted density of the positive electrode film layer may range from 2.3 g/cm³ to 2.6 g/cm³.

In some embodiments, a mass percentage of the first solvent (that is, the proportion of the first solvent) in a total mass of the organic solvent may be greater than or equal to 10%. For example, the proportion of the first solvent may be greater than or equal to 15%, 20%, 25%, 30%, 35%, 40%, 45%, 50%, 55%, or 60%.

In some embodiments, the proportion of the first solvent may range from 10% to 80%, from 15% to 80%, from 20% to 80%, from 25% to 80%, from 30% to 80%, from 35% to 80%, from 40% to 80%, from 45% to 80%, from 50% to 80%, from 10% to 75%, from 15% to 75%, from 20% to 75%, from 25% to 75%, from 30% to 75%, from 35% to 75%, from 40% to 75%, from 45% to 75%, from 50% to 75%, from 10% to 70%, from 15% to 70%, from 20% to 70%, from 25% to 70%, from 30% to 70%, from 35% to 70%, from 40% to 70%, from 45% to 70%, from 50% to 70%, from 10% to 65%, from 15% to 65%, from 20% to 65%, from 25% to 65%, from 30% to 65%, from 35% to 65%, from 40% to 65%, from 45% to 65%, from 50% to 65%, from 10% to 60%, from 15% to 60%, from 20% to 60%, from 25% to 60%, from 30% to 60%, from 35% to 60%, from 40% to 60%, from 45% to 60%, from 50% to 60%, from 10% to 55%, from 15% to 55%, from 20% to 55%, from 25% to 55%, from 30% to 55%, from 35% to 55%, from 40% to 55%, from 45% to 55%, or from 50% to 55%.

In some embodiments, the organic solvent may further include one or more of a second solvent represented by Formula 2 and a third solvent represented by Formula 3. R₂₁ in Formula 2 is one of H, methyl, and ethyl, and R₃₁ and R₃₂ in Formula 3 each are independently one of methyl, ethyl, and propyl; and R₃₁ and R₃₂ may be the same or different.

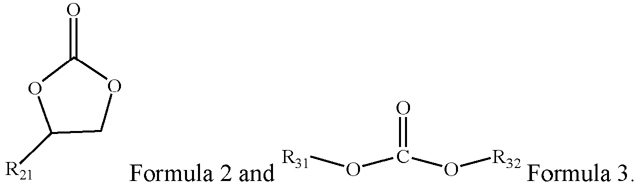

In the secondary battery in this application, the organic solvent may further include a second solvent represented by Formula 2, or a third solvent represented by Formula 3, or both the second solvent represented by Formula 2 and the third solvent represented by Formula 3, in addition to the first solvent represented by Formula 1. In some embodiments, the organic solvent further includes the second solvent represented by Formula 2, in addition to the first solvent represented by Formula 1.

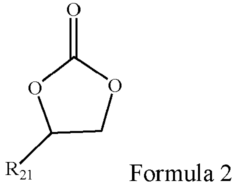

In some embodiments, as an example, the second solvent represented by Formula 2 may be selected from one or two of the following compounds:

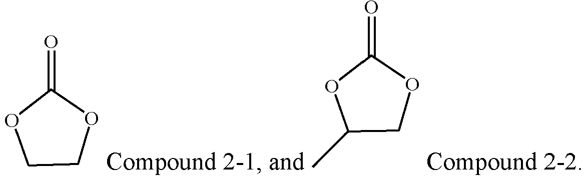

In some embodiments, as an example, the third solvent represented by Formula 3 may be selected from one or more of the following compounds: 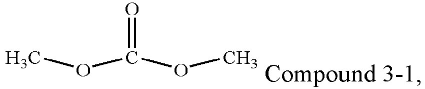 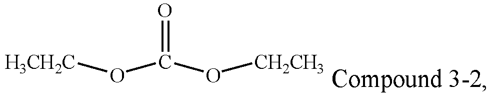 and

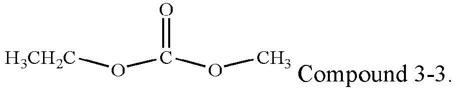

The second solvent has a higher dielectric constant, which facilitates dissociation of lithium salt. In some embodiments, a mass percentage of the second solvent in a total mass of the organic solvent may be greater than or equal to 10%. Optionally, the mass percentage of the second solvent may range from 10% to 80%. More specifically, the mass percentage of the second solvent may range from 20% to 50%.

The third solvent has a smaller dielectric constant, and has weak capability of dissociating the lithium salt, but has small viscosity and good fluidity, which can increase a migration rate of the active ions. In some embodiments, a mass percentage of the third solvent in the total mass of the organic solvent may be greater than or equal to 0%. Optionally, the mass percentage of the third solvent may range from 5% to 80%. More specifically, the mass percentage of the third solvent may range from 5% to 20%.

In the secondary battery in this application, the electrolyte may further include an additive, and the additive may be a film-forming additive. In some embodiments, reduction potential of the additive may be greater than or equal to 0.8 V (vs Li+/Li).

The SEI membrane on the surface of the negative electrode active material is insulated from electrons and allows the active ions to enter and exit freely, and can also prevent the negative electrode active material from further reacting with the electrolyte. Therefore, a feature of the SEI membrane on the surface of the negative electrode active material has impact on performance of the negative electrode plate and the battery, such as cycling performance and storage performance of the battery. The reduction potential of the additive in this application is greater than or equal to 0.8 V (vs Li⁺/Li), so that the additive can participate in an electrochemical reduction reaction prior to the organic solvent, to form the SEI membrane on the surface of the negative electrode active material, which promotes formation of the stable SEI membrane on the surface of the negative electrode active material and prevents the negative electrode active material from further reacting with the electrolyte, thereby reducing damage to the SEI membrane caused by protons generated during the reduction of the first solvent.

In some embodiments, the additive may include one or more of an organic solvent and an inorganic solvent.

In the secondary battery in this application, the additive may also only include the organic additive.

In some embodiments, as an example, the organic additive may include one or more of vinylene carbonate (Vinylene carbonate, VC), fluoroethylene carbonate (fluoroethylene carbonate, FEC), vinyl ethylene carbonate (Vinyl ethylene carbonate, VEC), ethylene sulfate (Ethylene sulfate, DTD), and 1,3-propane sultone (1,3-Propane sultone, PS). The organic additive is an electrochemical reductive additive, and has reduction potential higher than that of the organic solvent, and therefore, can priorly participate in electrochemical reduction on the surface of the negative electrode active material to form the SEI membrane with excellent performance, thereby reducing the damage to the SEI membrane caused by the protons generated during the reduction of the first solvent. Reduction products of the organic additive are mainly organic components, and these organic components can improve mechanical stability of the SEI membrane, which helps improve the cycling performance of the battery.

In some embodiments, as an example, the inorganic additive may include one or more of tris(trimethylsilyl) phosphate (tris(trimethylsilyl) phosphate, TMSP), lithium bis(oxalate)borate (Lithium bis(oxalate)borate, LiBOB), lithium bis[ethanedioato(2-)-κO1,κO2]difluorophosphate(1-) (Lithium bis[ethanedioato(2-)-κO1,κO2]difluorophosphate(1-), LiDFOP), lithium tetrafluoro(oxalato)phosphate (Lithium tetrafluoro(oxalato)phosphate, LiTFOP), lithium difluoro(oxalato)borate (Lithium difluoro(oxalato)borate, LiDFOB), and lithium difluorophosphate (lithium difluorophosphate, LiPO₂F₂). The inorganic additive is an electrochemical reductive additive, and has reduction potential higher than that of the organic solvent, and therefore, can priorly participate in electrochemical reduction on the surface of the negative electrode active material to form the SEI membrane with excellent performance, thereby reducing the damage to the SEI membrane caused by the protons generated during the reduction of the first solvent. Reduction products of the inorganic additive are mainly the inorganic components, and these inorganic components can improve thermal stability of the SEI membrane, which helps improve high-temperature performance of the battery.

In some embodiments, optionally, the additive includes one or more of vinylene carbonate, fluoroethylene carbonate, 1,3-propane sultone, ethylene sulfate, lithium difluorophosphate, and tris(trimethylsilyl) phosphate. Reduction products of the vinylene carbonate, fluoroethylene carbonate, 1,3-propane sultone, and ethylene sulfate may be used as the organic components in the SEI membrane, which improves mechanical stability of the SEI membrane and tolerance of the SEI membrane to a volume change of the negative electrode active material during cycling of the battery. Reduction products of the lithium difluorophosphate and tris(trimethylsilyl) phosphate may be used as the inorganic components in the SEI membrane, which improves the thermal stability of the SEI membrane, so that the SEI membrane is not easily dissociated even under high temperature.

In some embodiments, a mass percentage of the organic additive in a total mass of the additive may be greater than or equal to 50%. For example, the mass percentage of the organic additive may be greater than or equal to 55%, 60%, 65%, 70%, 75%, 80%, 85%, 90%, 95%, or 100%.

In some embodiments, the mass percentage of the organic additive may range from 50% to 100%, from 55% to 100%, from 60% to 100%, from 65% to 100%, from 70% to 100%, from 75% to 100%, from 80% to 100%, from 85% to 100%, from 90% to 100%, or from 95% to 100%.

In some embodiments, a mass percentage of the inorganic additive in a total mass of the additive may be less than or equal to 50%. For example, the mass percentage of the inorganic additive may be less than or equal to 45%, 40%, 35%, 30%, 25%, 20%, 15%, 10%, 5%, or 0%.

In some embodiments, the mass percentage of the inorganic additive may range from 0% to 50%, from 0% to 45%, from 0% to 40%, from 0% to 35%, from 0% to 30%, from 0% to 25%, from 0% to 20%, from 0% to 15%, from 0% to 10%, or from 0% to 5%.

When the proportion of the additive is increased, the amount of additive that can be consumed in a formation process of the secondary battery is increased, a SEI membrane formed on the surface of the negative electrode active material is thickened, and membrane-forming impedance at the negative electrode is increased; however, the thickening of the SEI membrane enhances protection for the negative electrode active material, the stability of the negative electrode interface is improved, and the SEI membrane has higher tolerance to a side effect caused by the first solvent. In some embodiments, a mass percentage of the additive in a total mass of the electrolyte (that is, the proportion of the additive) may be greater than or equal to 3%. For example, the proportion of the additive may be greater than or equal to 3.5%, 4%, 4.5%, 5%, 5.5%, 6%, 6.5%, 7%, 7.5%, 8%, 9%, 10%, 11%, or 12%.

In the secondary battery of this application, the "proportion of the additive" means a sum of the proportion of the organic additive and the proportion of the inorganic additive.

In some embodiments, optionally, the proportion of the additive may range from 3% to 9%. More specifically, the proportion of the additive may range from 5% to 8%.

This application imposes no specific limitation on a type of lithium salt, which may be selected based on an actual need. In some embodiments, in an example, the lithium salt may include one or more of LiPF₆, LiBF₄, LiAsF₆, Li(FSO₂)₂N, LiCF₃SO₃, LiClO₄, and LiN(CₓF₂ₓ₊₁SO₂)(C_{y}F_{2y+1}SO₂), where x and y are positive integers.

The smaller the mass percentage (for example, less than 10%) of the lithium salt, the fewer the active ion transfer units inside the battery. During high-rate charging, potential of the negative electrode drops rapidly, and dendrite is easily generated on the surface of the negative electrode, which increases the irreversible consumption of the active ions; and if the dendrite is continuously generated, the separator may also be pierced, thereby causing internal short circuit between the positive and negative electrodes. The smaller the mass percentage of the lithium salt, the higher the proportion of a free organic solvent (especially, the first solvent) in the electrolyte. As a result, the SEI membrane on the surface of the negative electrode active material is unstable, and the SEI membrane is further easily dissociated by protons. In some embodiments, a mass percentage of the lithium salt in a total mass of the electrolyte may be greater than or equal to 10%. For example, the mass percentage of the lithium salt may be greater than or equal to 11%, 12%, 13%, 14%, 15%, 16%, 17%, or 18%.

Conductivity of the electrolyte depends on the total quantity of active ions that can be migrated and a migration rate of the active ions. When the mass percentage of the lithium salt is increased, the total quantity of active ions that can be migrated is increased, but viscosity of the electrolyte is also increased, and the migration rate of the active ions is decreased. Therefore, there is an optimum value for the mass percentage of the lithium salt. In some embodiments, the mass percentage of the lithium salt may range from 10% to 20%. Optionally, the mass percentage of the lithium salt may range from 12% to 17%.

The additive promotes formation of the stable SEI membrane on the surface of the negative electrolyte active material. The larger the specific surface area of the negative electrode active material, the greater the amount of needed additive; and the more additive the first solvent also consumes. After extensive study and tests, the inventor obtains coefficients of consumption of the two additives, and a demand level of the additives is denoted as a sum of two types of consumption; and an amount of retained additive may be denoted as the electrolyte retention coefficient multiplied by the proportion of the additive. A good negative electrode interface can be ensured only when an amount of retained additive is greater than or equal to the required amount of additive, thereby effectively suppressing a side reaction at the negative electrode interface.

After extensive study, the inventor has found that when the secondary battery further satisfies: (electrolyte retention coefficient × proportion of additive)/(relative mass of negative electrode × specific surface area of negative electrode active material × 0.012 + electrolyte retention coefficient × proportion of first solvent × 0.03) is ≥ 1, the additive can effectively protect the negative electrode interface and suppress an aggravation problem of a side reaction at the negative electrode interface caused due to the instability of the first solvent, and therefore, the secondary battery has a higher capacity retention rate and a lower volume swelling ratio during use.

The electrolyte retention coefficient refers to a quotient calculated by dividing the mass of the electrolyte by the rated capacity of the secondary battery, and is measured in g/Ah; the proportion of the additive refers to a mass percentage of the additive in a total mass of the electrolyte; the relative mass of the negative electrode refers to a quotient calculated by dividing the mass of the negative electrode active material in the negative electrode plate by the rated capacity of the secondary battery, and is measured in g/Ah; and the specific surface area of the negative electrode active material is measured in m²/g.

In some embodiments, the secondary battery further satisfies: (electrolyte retention coefficient × proportion of additive)/(relative mass of negative electrode × specific surface area of negative electrode active material × 0.012 + electrolyte retention coefficient × proportion of first solvent × 0.03) is ≥ 1.2, (electrolyte retention coefficient × proportion of additive)/(relative mass of negative electrode × specific surface area of negative electrode active material × 0.012 + electrolyte retention coefficient × proportion of first solvent × 0.03) is ≥ 1.4, (electrolyte retention coefficient × proportion of additive)/(relative mass of negative electrode × specific surface area of negative electrode active material × 0.012 + electrolyte retention coefficient × proportion of first solvent × 0.03) is ≥ 1.6, (electrolyte retention coefficient × proportion of additive)/(relative mass of negative electrode × specific surface area of negative electrode active material × 0.012 + electrolyte retention coefficient × proportion of first solvent × 0.03) is ≥ 1.8, (electrolyte retention coefficient × proportion of additive)/(relative mass of negative electrode × specific surface area of negative electrode active material × 0.012 + electrolyte retention coefficient × proportion of first solvent × 0.03) is ≥ 2, (electrolyte retention coefficient × proportion of additive)/(relative mass of negative electrode × specific surface area of negative electrode active material × 0.012 + electrolyte retention coefficient × proportion of first solvent × 0.03) is ≥ 2.2, (electrolyte retention coefficient × proportion of additive)/(relative mass of negative electrode × specific surface area of negative electrode active material × 0.012 + electrolyte retention coefficient × proportion of first solvent × 0.03) is ≥ 2.4, (electrolyte retention coefficient × proportion of additive)/(relative mass of negative electrode × specific surface area of negative electrode active material × 0.012 + electrolyte retention coefficient × proportion of first solvent × 0.03) is ≥ 2.8, or (electrolyte retention coefficient × proportion of additive)/(relative mass of negative electrode × specific surface area of negative electrode active material × 0.012 + electrolyte retention coefficient × proportion of first solvent × 0.03) is ≥ 3.2.

In some embodiments, the relative mass of the negative electrode may be less than or equal to 2.1 g/Ah. For example, the relative mass of the negative electrode may be less than or equal to 2.08 g/Ah, 2.05 g/Ah, 2.0 g/Ah, 1.95 g/Ah, 1.9 g/Ah, 1.85 g/Ah, 1.8 g/Ah, 1.75 g/Ah, 1.7 g/Ah, 1.65 g/Ah, 1.6 g/Ah, 1.55 g/Ah, or 1.5 g/Ah.

In some embodiments, optionally, the relative mass of the negative electrode may range from 1.2 g/Ah to 2.1 g/Ah. More specifically, the relative mass of the negative electrode may range from 1.5 g/Ah to 1.8 g/Ah.

In the secondary battery in this application, the specific surface area of the negative electrode active material may range from 0.5 m²/g to 6.0 m²/g. For example, the specific surface area of the negative electrode active material may range from 1.0 m²/g to 5.0 m²/g, from 1.0 m²/g to 4.0 m²/g, from 1.0 m²/g to 3.2 m²/g, from 1.0 m²/g to 2.8 m²/g, from 1.2 m²/g to 5.0 m²/g, from 1.2 m²/g to 4.0 m²/g, from 1.2 m²/g to 3.0 m²/g, from 1.2 m²/g to 2.8 m²/g, from 1.5 m²/g to 5.0 m²/g, from 1.5 m²/g to 4.0 m²/g, from 1.5 m²/g to 3.0 m²/g, from 2.0 m²/g to 5.0 m²/g, from 2.0 m²/g to 4.0 m²/g, or from 2.0 m²/g to 3.0 m²/g.

The secondary battery in this application further includes a separator. The separator is disposed between the positive electrode plate and the negative electrode plate for isolation. This application imposes no particular limitation on a type of the separator, which may be any well-known porous separator with good chemical stability and mechanical stability. In some embodiments, a material of the separator may be selected from one or more of a glass fiber, non-woven, polyethylene, polypropylene polyethylene, and polyvinylidene fluoride. The separator may be a single-layer thin film or a multi-layer composite thin film. When the separator is a multi-layer composite thin film, each layer is made of the same or different materials. In some embodiments, a ceramic coating layer or a metal oxide coating layer may also be arranged on the separator.

In some embodiments, the positive electrode plate, the negative electrode plate, and the separator may be made into an electrode assembly through winding or lamination.

In some embodiments, the secondary battery may include an outer package. The outer package may be used for packaging the electrode assembly and the electrolyte.

In some embodiments, the outer package of the secondary battery may be a hard shell, for example, a hard plastic shell, an aluminum shell, or a steel shell. The outer package of the secondary battery may alternatively be a soft package, for example, a soft bag. A material of the soft pack may be plastic, for example, one or more of polypropylene (PP), polybutylene terephthalate (PBT), polybutylene succinate (PBS), and the like.

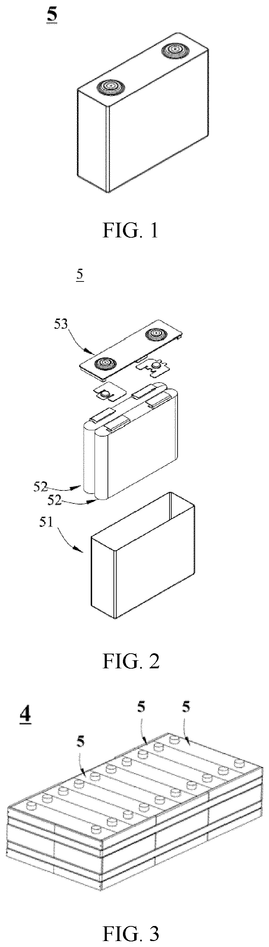

This application imposes no special limitation on a shape of the secondary battery, and the lithium-ion battery may be cylindrical, rectangular, or of any other shape. FIG. 1 shows a secondary battery 5 of a rectangular structure as an example.

In some embodiments, referring to FIG. 2, the outer package may include a housing 51 and a cover plate 53. The housing 51 may include a bottom plate and a side plate connected to the bottom plate, and the bottom plate and the side plate enclose an accommodating cavity. The housing 51 has an opening connected to the accommodating cavity, and the cover plate 53 is configured to cover the opening to seal the accommodating cavity. A positive electrode plate, a negative electrode plate, and a separator may be made into an electrode assembly 52 through winding or lamination. The electrode assembly 52 is packaged in the accommodating cavity. The electrolyte infiltrates into the electrode assembly 52. There may be one or more electrode assemblies 52 in the secondary battery 5, and the quantity of the electrode assemblies may be adjusted as required.

In some embodiments, such secondary batteries may be assembled into a battery module. The battery module may include a plurality of secondary batteries whose quantity may be adjusted according to the use case and capacity of the battery module.

FIG. 3 shows a battery module 4 as an example. Referring to FIG. 3, in the battery module 4, a plurality of secondary batteries 5 may be sequentially arranged in a length direction of the battery module 4. Certainly, the secondary batteries may alternatively be arranged in any other manner. Further, the plurality of secondary batteries 5 may be fastened through fasteners.

Optionally, the battery module 4 may further include a housing with accommodating space, and the plurality of secondary batteries 5 are accommodated in the accommodating space.

In some embodiments, the battery modules may be further assembled into a battery pack, and a quantity of battery modules included in the battery pack may be adjusted based on application and a capacity of the battery pack.

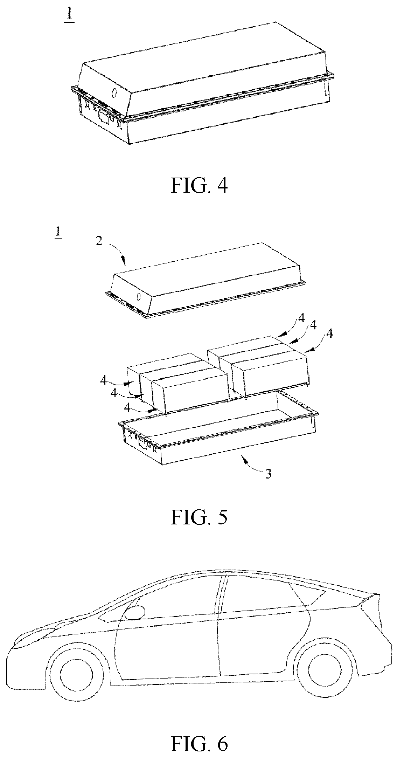

FIG. 4 and FIG. 5 show a battery pack 1 as an example. Referring to FIG. 4 and FIG. 5, the battery pack 1 may include a battery box and a plurality of battery modules 4 arranged in the battery box. The battery box includes an upper box body 2 and a lower box body 3. The upper box body 2 is configured to cover the lower box body 3 to form enclosed space for accommodating the battery modules 4. The plurality of battery modules 4 may be arranged in the battery box in any manner.

### Preparation method of a secondary battery

In some embodiments, the preparation method of a secondary battery in this application may include the following steps:
S10. Assemble a positive electrode plate, a separator, a negative electrode plate, and an electrolyte into a secondary battery.
S20. Test the secondary battery, and select a secondary battery satisfying that mass of first solvent divided by rated capacity of secondary battery is greater than or equal to 0.7 g/Ah and that mass of electrolyte divided by rated capacity of secondary battery is less than or equal to 3.5 g/Ah.

The secondary battery obtained by using the method in this application each can have good kinetic performance, a high capacity retention rate, and a low volume swelling ratio while maintaining high energy density.

In some embodiments, in step S10, in an example, the positive electrode plate, the separator, and the negative electrode plate may be made into an electrode assembly through winding or lamination; and the electrode assembly is put in an outer package, and after drying, the electrolyte is injected, followed by processes such as vacuum packaging, standing, formation, and shaping, to obtain the secondary battery.

In some embodiments, in step S20, optionally, a secondary battery satisfying that mass of first solvent divided by rated capacity of secondary battery is greater than or equal to 1.0 g/Ah is selected.

In some embodiments, in step S20, optionally, a secondary battery satisfying that mass of electrolyte/rated capacity of secondary battery ranges from 2.8 g/Ah to 3.3 g/Ah is selected.

In some embodiments, the preparation method further includes a step: S30. Select a secondary battery satisfying that proportion of first solvent/(thickness of positive electrode film layer × 3 + 0.008/porosity of positive electrode film layer) is ≥ 1. In this way, not only the high energy density and the good kinetic performance of the battery are ensured, but also a good negative electrode interface is ensured. Therefore, the battery in this application can have good cycling performance and storage performance.

In some embodiments, the preparation method further includes a step: S40. Select a secondary battery satisfying that proportion of first solvent/(thickness of positive electrode film layer × 3 + 0.008/porosity of positive electrode film layer) is ≥ 1 and that (electrolyte retention coefficient × proportion of additive)/(relative mass of negative electrode × specific surface area of negative electrode active material × 0.012 + electrolyte retention coefficient × proportion of first solvent × 0.03) is ≥ 1. In this case, the problem of the poor kinetic performance of the battery that is caused after the coating weight and the compacted density of the positive electrode film layer are increased and the problem of causing damage by the first solvent to the negative electrode interface can be effectively resolved.

### Electric apparatus

This application further provides an electric apparatus. The electric apparatus includes at least one of the secondary battery, the battery module, or the battery pack in this application. The secondary battery, the battery module, or the battery pack may be used as a power source for the electric apparatus, or an energy storage unit of the electric apparatus. The electric apparatus may be, but is not limited to, a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, an energy storage system, and the like.

The secondary battery, the battery module, or the battery pack may be selected for the electric apparatus based on requirements for using the apparatus.

FIG. 6 shows an electric apparatus used as an example. The electric apparatus is a battery electric vehicle, a hybrid electric vehicle, a plug-in hybrid electric vehicle, or the like. To satisfy a requirement of the electric apparatus for high power and high energy density, a battery pack or a battery module may be used.

In another example, the electric apparatus may be a mobile phone, a tablet computer, a notebook computer, or the like. The electric apparatus is usually required to be light and thin, and the secondary battery may be used as a power source.

### Examples

Content disclosed in this application is described in detail in the following examples. These examples are intended only for illustrative purposes because various modifications and changes made without departing from the scope of the content disclosed in this application are apparent to those skilled in the art. Unless otherwise stated, all parts, percentages, and ratios reported in the following examples are based on masses, all reagents used in the examples are commercially available or synthesized in a conventional manner, and can be used directly without further treatment, and all instruments used in the examples are commercially available.

### Example 1

### Preparation of positive electrode plate

A positive electrode active material lithium iron phosphate, a binder polyvinylidene fluoride, and a conductive agent acetylene black were mixed at a mass ratio of 96:2:2, and then a solvent N-methylpyrrolidone (NMP) was added to adjust viscosity, and the mixture was fully stirred to prepare a positive electrode slurry in a method well-known in the field. The positive electrode slurry was uniformly applied onto positive electrode current collector aluminum foil, followed by drying and cold pressing, to obtain a positive electrode plate. Porosity of a positive electrode film layer was 30%, and a thickness of the positive electrode film layer was 0.1 mm.

### Preparation of negative electrode plate

A negative electrode active material graphite (with a specific surface area of 2 m²/g), a conductive agent acetylene black, a binder styrene-butadiene rubber (SBR), and a thickener sodium carboxymethyl cellulose (CMC-Na) were mixed at a mass ratio of 97:1:1:1, and then a solvent deionized water was added, and the mixture was fully stirred to prepare a negative electrode slurry in a method well-known in the field. The negative electrode slurry was uniformly applied onto negative electrode current collector copper foil, followed by drying and cold pressing, to obtain a negative electrode plate.

### Preparation of electrolyte

In a glove box under an argon atmosphere with water content less than 10 ppm, a first solvent Compound 1-1, a second solvent Compound 2-1, and a third solvent Compound 3-1 were uniformly mixed at a mass ratio of 50:30:20 to obtain an organic solvent; lithium hexafluorophosphate (LiPF₆) as lithium salt was slowly added at a mass percentage of 15%, and the mixture was fully stirred until lithium hexafluorophosphate was completely dissolved; and after a mixture solution returned to room temperature, 3% of vinylene carbonate (VC), 2% of fluoroethylene carbonate (FEC), 0.5% of 1,3-propane sultone (PS), and 0.5% of lithium bis[ethanedioato(2-)-κO1,κO2]difluorophosphate(1-) (LiDFOP) were added in sequence, to obtain an electrolyte.

### Preparation of separator

A polyethylene (PE) membrane coated with a nano aluminum oxide coating layer was used as a separator.

### Preparation of secondary battery

A positive electrode plate were stacked in order and wound to obtain an electrode assembly. The electrode assembly was added into an outer package of an aluminum-plastic film, and after drying, the electrolyte was added, followed by processes such as packaging, standing, formation, aging, secondary packaging, and capacity, to obtain a secondary battery. The first solvent divided by the rated capacity of the secondary battery equaled to 1.6 g/Ah, the electrolyte retention coefficient of the secondary battery was 3.1 g/Ah, and the relative mass of the negative electrode was 1.7 g/Ah.

### Examples 2 to 30 and Comparative Examples 1 to 8

A preparation method in Examples 2 to 30 and Comparative Examples 1 to 8 was similar to that in Example 1 except that related parameters for preparation of the positive electrode plate, the negative electrode plate, and the electrolyte were adjusted. For specific parameters, refer to Table 1 and Table 2. Examples 26 to 30 are non-claimed examples.

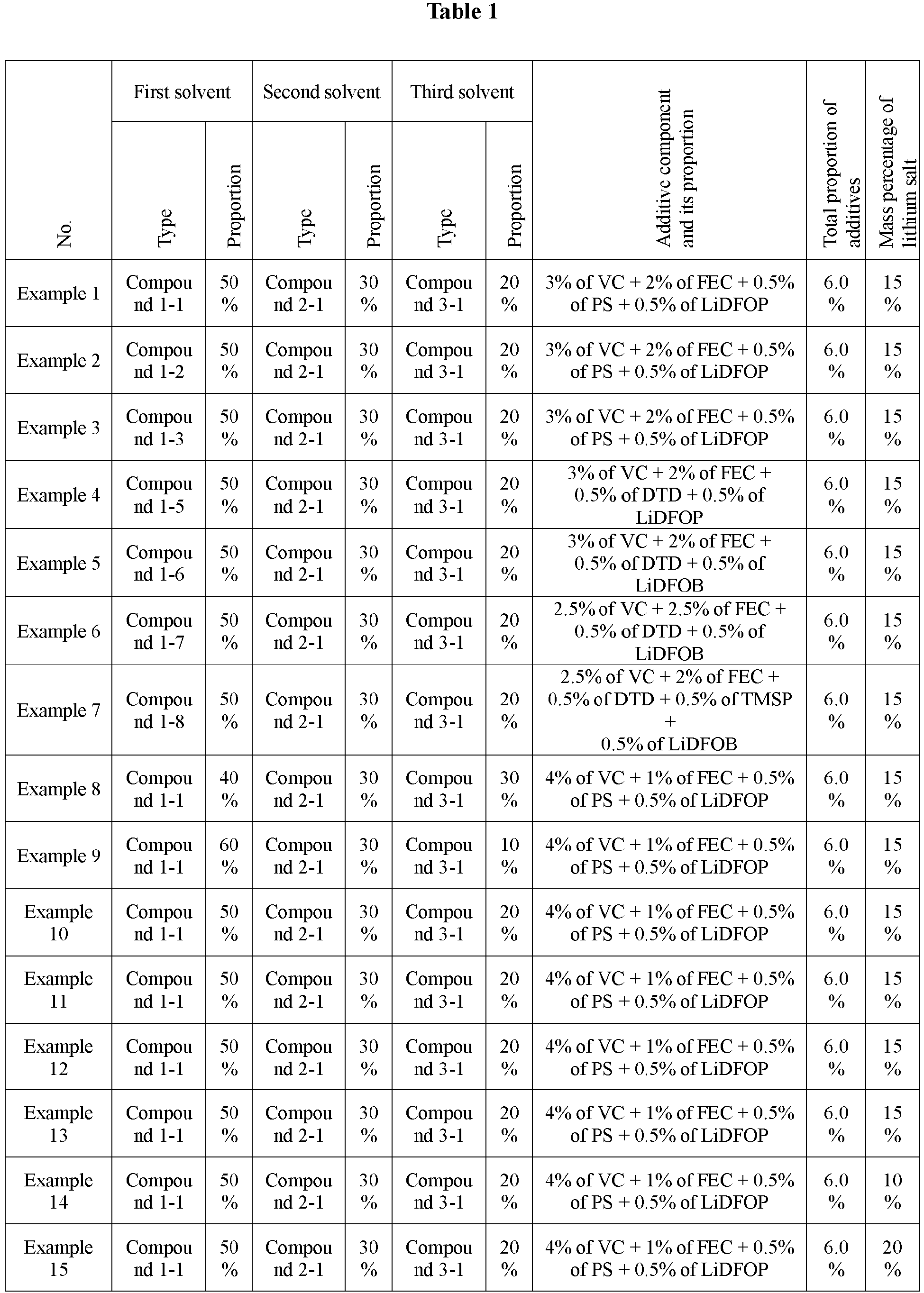

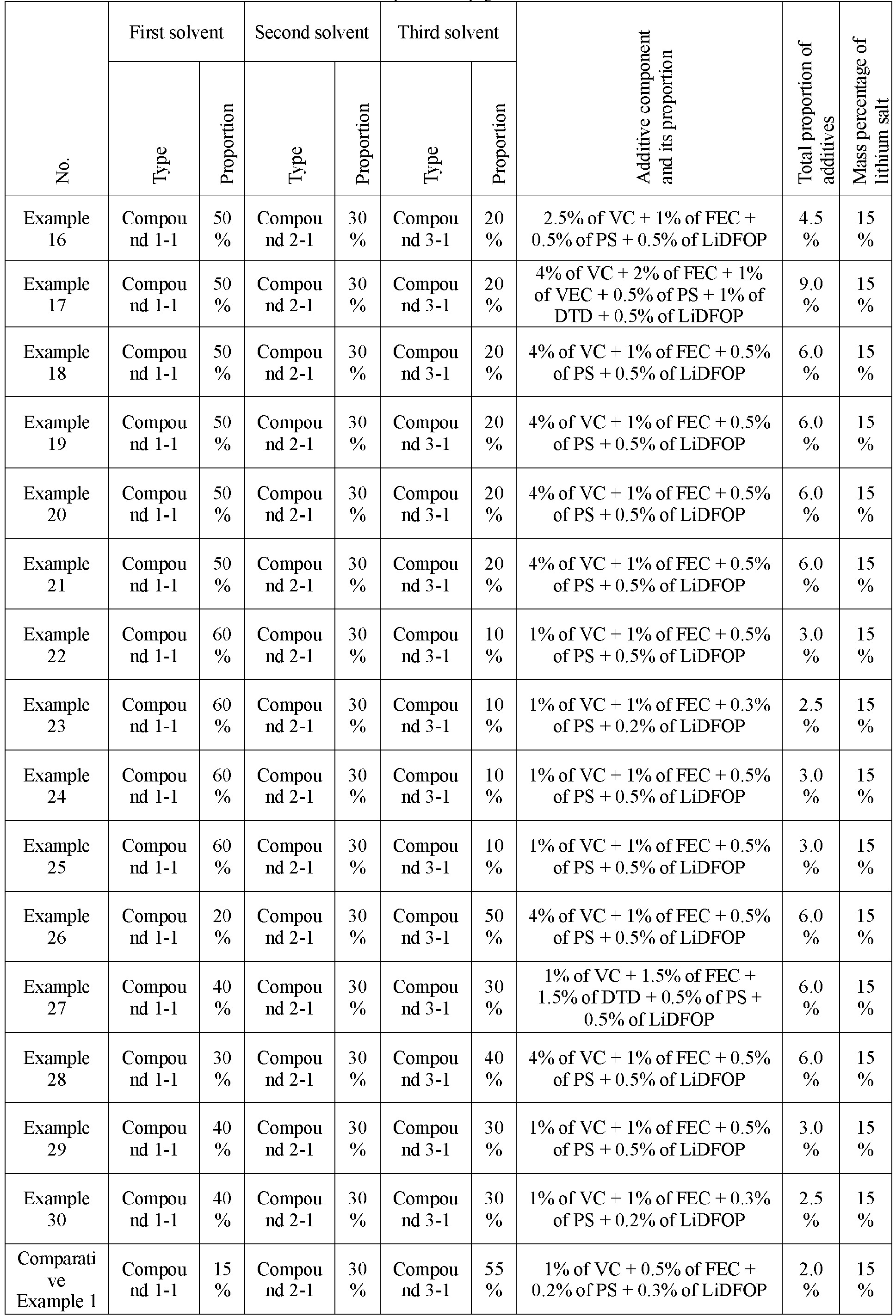

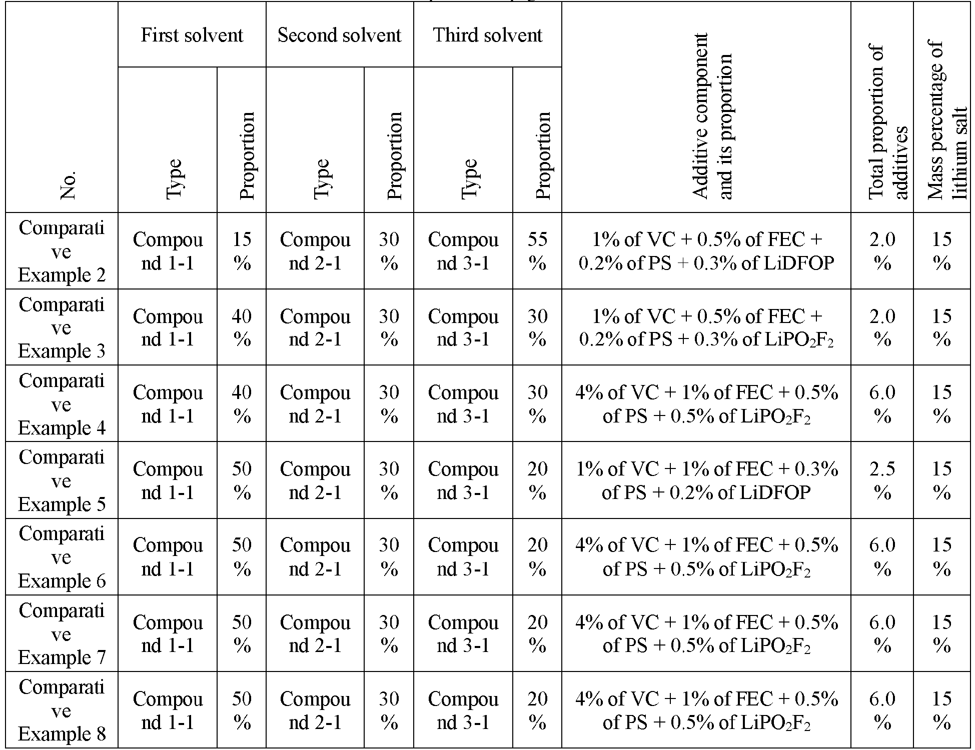

**Table 2**

| No. | Thickness of positive electrode film layer (mm) | Porosity of positive electrode film layer | Relative mass of negative electrode (g/Ah) | Specific surface area of negative electrode active material (m²/g) | Mass of first solvent/rated capacity of secondary battery (g/Ah) | Mass of electrolyte/rated capacity of secondary battery (g/Ah) |
|---|---|---|---|---|---|---|
| Example 1 | 0.1 | 30% | 1.7 | 2 | 1.6 | 3.1 |
| Example 2 | 0.1 | 30% | 1.7 | 2 | 1.6 | 3.1 |
| Example 3 | 0.1 | 30% | 1.7 | 2 | 1.6 | 3.1 |
| Example 4 | 0.1 | 30% | 1.7 | 2 | 1.6 | 3.1 |
| Example 5 | 0.1 | 30% | 1.7 | 2 | 1.6 | 3.1 |
| Example 6 | 0.1 | 30% | 1.7 | 2 | 1.6 | 3.1 |
| Example 7 | 0.1 | 30% | 1.7 | 2 | 1.6 | 3.1 |
| Example 8 | 0.1 | 30% | 1.7 | 2 | 1.2 | 3.1 |
| Example 9 | 0.1 | 30% | 1.7 | 2 | 1.9 | 3.1 |
| Example 10 | 0.12 | 30% | 1.7 | 2 | 1.6 | 3.1 |
| Example 11 | 0.09 | 30% | 1.7 | 2 | 1.6 | 3.1 |
| Example 12 | 0.1 | 40% | 1.7 | 2 | 1.6 | 3.1 |
| Example 13 | 0.1 | 15% | 1.7 | 2 | 1.6 | 3.1 |
| Example 14 | 0.1 | 30% | 1.7 | 2 | 1.6 | 3.1 |
| Example 15 | 0.1 | 30% | 1.7 | 2 | 1.6 | 3.1 |
| Example 16 | 0.1 | 30% | 1.7 | 2 | 1.6 | 3.1 |
| Example 17 | 0.1 | 30% | 1.7 | 2 | 1.6 | 3.1 |
| Example 18 | 0.1 | 30% | 1.5 | 2 | 1.6 | 3.1 |
| Example 19 | 0.1 | 30% | 1.2 | 2 | 1.6 | 3.1 |
| Example 20 | 0.1 | 30% | 1.7 | 2.8 | 1.6 | 3.1 |
| Example 21 | 0.1 | 30% | 1.7 | 1.5 | 1.6 | 3.1 |
| Example 22 | 0.1 | 30% | 1.7 | 3 | 1.9 | 3.1 |
| Example 23 | 0.1 | 30% | 1.7 | 2 | 1.9 | 3.1 |
| Example 24 | 0.1 | 30% | 1.7 | 2 | 1.5 | 2.5 |
| Example 25 | 0.1 | 30% | 1.9 | 2 | 1.9 | 3.1 |
| Non-claimed Example 26 | 0.1 | 30% | 1.7 | 2 | 0.7 | 3.3 |
| Non-claimed Example 27 | 0.14 | 30% | 1.7 | 2 | 1.2 | 3.1 |
| Non-claimed Example 28 | 0.1 | 20% | 1.7 | 2 | 0.9 | 3.1 |
| Non-claimed Example 29 | 0.14 | 15% | 1.9 | 2.5 | 1.1 | 2.8 |
| Non-claimed Example 30 | 0.14 | 15% | 1.9 | 2.5 | 1.1 | 2.8 |
| Comparative Example 1 | 0.1 | 30% | 1.9 | 2.8 | 0.5 | 3.5 |
| Comparative Example 2 | 0.1 | 30% | 1.9 | 2.8 | 0.5 | 3.6 |
| Comparative Example 3 | 0.14 | 30% | 1.7 | 2 | 1.5 | 3.8 |
| Comparative Example 4 | 0.14 | 20% | 1.7 | 2 | 1.5 | 3.8 |
| Comparative Example 5 | 0.1 | 30% | 1.7 | 2.5 | 1.9 | 3.8 |
| Comparative Example 6 | 0.1 | 30% | 1.7 | 2 | 1.8 | 3.6 |
| Comparative Example 7 | 0.1 | 30% | 1.7 | 2 | 2.0 | 4 |
| Comparative Example 8 | 0.1 | 30% | 1.7 | 2 | 3.0 | 6 |

### Tests

### (1) Initial DC internal resistance (DC internal resistance, DCR) test

At room temperature, the batteries were charged to 3.65 V at a constant current of 0.5C, then charged to a current of 0.05C at a constant voltage, and discharged for 30 minutes at a constant current of 0.5C, to adjust the batteries to 50% SOC, and in this case, voltages of the batteries were denoted as U₁s; and the batteries were discharged for 30 seconds at a constant current of 4C, with a sample collected every 0.1 second, and voltages at an end of the discharge were denoted as U₂s. Discharge DCRs at 50% SOC of the batteries were used as the initial DCRs of the batteries, and initial DCR of battery = (U₁ - U₂)/4C.

### (2) Cycling performance test at 60°C

At 60°C, the batteries were charged to 3.65 V at a constant current of 0.5C, then charged to a current of 0.05C at a constant voltage, left standing for 5 minutes, and discharged to 2.5 V at a constant current of 1/3C, which was an initial charge and discharge cycle of the batteries. Discharge capacities of this cycle were recorded as discharge capacities of the batteries at the initial cycles. 1000 charge and discharge cycles were performed on the batteries in the foregoing method, and discharge capacities of the batteries after 1000 cycles were recorded. Capacity retention rate (%) of battery after 1000 cycles at 60°C = (discharge capacity of battery after 1000 cycles/discharge capacity of battery at initial cycle) × 100%.

### (3) Volume swelling ratio test at 60°C

At 60°C, the batteries were charged to 3.65 V at a constant current of 0.5C, and then charged to a current of 0.05C at a constant voltage. Then volumes of the batteries were measured in a dunking method and denoted as V₀s; and the batteries were put into a 60°C thermostat, and the volumes of the batteries after 30 days of storage were measured in the dunking method and denoted as V₁s. Volume swelling ratio of battery after 30 days of storage at 60°C = [(V₁ - V₀)/V₀] × 100%.

For specific parameters in Examples 1 to 30 and Comparative Examples 1 to 8, refer to Table 1 and Table 2. For test results, refer to Table 3.

In Table 3, Formula I is: proportion of first solvent/(thickness of positive electrode film layer × 3 + 0.008/porosity of positive electrode film layer), and Formula II is: (electrolyte retention coefficient × proportion of additive)/(relative mass of negative electrode × specific surface area of negative electrode active material × 0.012 + electrolyte retention coefficient × proportion of first solvent × 0.03). Examples 26 - 30 are non-claimed examples.

**Table 3**

| No. | Formula I | Formula II | Initial DCR (mohm) | Capacity retention rate after 1000 cycles at 60°C | Volume swelling ratio after 30 days of storage at 60°C |
|---|---|---|---|---|---|
| Example 1 | 1.53 | 2.13 | 20.7 | 86.30% | 6.30% |
| Example 2 | 1.53 | 2.13 | 20.9 | 86.50% | 6.30% |
| Example 3 | 1.53 | 2.13 | 21 | 86.60% | 5.30% |
| Example 4 | 1.53 | 2.13 | 21.3 | 86.80% | 6.00% |
| Example 5 | 1.53 | 2.13 | 22.6 | 87.20% | 5.60% |
| Example 6 | 1.53 | 2.13 | 21.1 | 86.70% | 6.20% |
| Example 7 | 1.53 | 2.13 | 21.6 | 87.10% | 5.80% |
| Example 8 | 1.22 | 2.38 | 25.5 | 87.20% | 4.90% |
| Example 9 | 1.84 | 1.93 | 18.6 | 85.10% | 7.80% |
| Example 10 | 1.29 | 2.13 | 24.6 | 86.00% | 6.90% |
| Example 11 | 1.69 | 2.13 | 18.7 | 86.50% | 5.40% |
| Example 12 | 1.56 | 2.13 | 19 | 86.90% | 6.20% |
| Example 13 | 1.42 | 2.13 | 24.2 | 85.90% | 7.20% |
| Example 14 | 1.53 | 2.13 | 21.6 | 86.10% | 6.60% |
| Example 15 | 1.53 | 2.13 | 21.3 | 86.50% | 6.20% |
| Example 16 | 1.53 | 1.60 | 20.4 | 84.80% | 8.80% |
| Example 17 | 1.53 | 3.20 | 21.9 | 88.00% | 4.10% |
| Example 18 | 1.53 | 2.25 | 20.9 | 87.10% | 5.00% |
| Example 19 | 1.53 | 2.47 | 21.5 | 87.40% | 4.90% |
| Example 20 | 1.53 | 1.80 | 19.2 | 85.10% | 8.30% |
| Example 21 | 1.53 | 2.41 | 21.2 | 87.20% | 5.00% |
| Example 22 | 1.84 | 0.79 | 16.7 | 81.10% | 16.90% |
| Example 23 | 1.84 | 0.80 | 18.4 | 81.70% | 16.60% |
| Example 24 | 1.84 | 0.87 | 18.3 | 81.90% | 14.90% |
| Example 25 | 1.84 | 0.92 | 17.6 | 82.20% | 12.80% |
| Example 26 | 0.61 | 3.27 | 32.8 | 88.40% | 3.60% |
| Example 27 | 0.90 | 2.38 | 28.5 | 87.20% | 4.80% |
| Example 28 | 0.88 | 2.71 | 30.3 | 87.60% | 4.50% |
| Example 29 | 0.85 | 0.93 | 31.8 | 82.30% | 13.00% |
| Example 30 | 0.85 | 0.77 | 31.8 | 80.90% | 17.60% |
| Comparative Example 1 | 0.46 | 0.88 | 38.1 | 81.90% | 15.00% |
| Comparative Example 2 | 0.46 | 0.90 | 38.8 | 80.80% | 16.70% |
| Comparative Example 3 | 0.90 | 0.88 | 27.5 | 78.40% | 21.60% |
| Comparative Example 4 | 0.87 | 2.64 | 31.2 | 79.60% | 19.10% |
| Comparative Example 5 | 1.53 | 0.88 | 20.7 | 78.20% | 22.00% |
| Comparative Example 6 | 1.53 | 2.28 | 20.7 | 80.90% | 16.30% |
| Comparative Example 7 | 1.53 | 2.38 | 20.9 | 77.20% | 27.20% |
| Comparative Example 8 | 1.53 | 2.75 | 21.6 | 74.30% | 32.60% |

By comparing Examples 1 to 30 with Comparative Examples 1 to 8, it could be learned that, only when the batteries both satisfied that a mass of the first solvent divided by the rated capacity of the secondary battery was greater than or equal to 0.7 g/Ah and a mass of the electrolyte divided by the rated capacity of the secondary battery was less than or equal to 3.5 g/Ah, the secondary batteries could have low initial DCRs, high capacity retention rates after cycling at high temperature, and low volume swelling ratios after storage at high temperature while maintaining the high energy density. When the mass of the first solvent divided by the rated capacity of the secondary battery was not greater than or equal to 0.7 g/Ah, the proportions of the first solvents inside the batteries were extremely low, the kinetic performance of the batteries cannot be effectively improved, and the initial DCRs of the batteries were relatively high. When the mass of the electrolyte divided by the rated capacity of the secondary battery was not less than or equal to 3.5, parts of the organic solvents in the electrolytes continued consuming the active ions, and therefore, irreversible consumptions of the active ions were continuously increased, and the batteries could not have all of low initial DCRs, high capacity retention rates after cycling at high temperature, and low volume swelling ratios after storage at high temperature.

By comparing Examples 1 to 7, it could be learned that the batteries had low initial DCRs, high capacity retention rates after cycling at high temperature, and low volume swelling ratios after storage at high temperature. In addition, for different types of the first solvents in the electrolytes, the foregoing performance of the batteries might be slightly changed, which was caused by the characteristic of the different first solvents. In these first solvents, Compound 1-1 had lowest viscosity and a highest dielectric constant, and therefore, the prepared battery also had a lowest initial DCR. However, in these first solvents, Compound 1-1 had poorest stability at the negative electrode, and was more likely to damage the stability of the negative electrode interface, thereby causing continuous film formation on the surface of the negative electrode active material and greatest irreversible consumption of lithium ions. Products generated after reduction and dissociation of Compound 1-1 at the negative electrode were accumulated on the negative electrode interface, which also extended a migration path of the lithium ions and reduced a migration rate of the lithium ions. Therefore, among Examples 1 to 7, in Example 1, the negative electrode interface was in a poorest condition, the capacity of the battery decayed at a fastest speed after cycling at high temperature, and the volume swelling ratio of the battery was maximum after storage at high temperature.

By comparing Examples 8 and 9, it could be learned that the lower the proportion of the first solvent, the less the damage to the negative electrode interface, the higher the capacity retention rate of the battery after cycling at high temperature, and the lower the volume swelling ratio after storage at high temperature. However, in addition, the lower the proportion of the first solvent, the less the improvement of the kinetic performance of the battery, and the greater the initial DCR of the battery.

By comparing Examples 10 and 11, it could be learned that when a thickness of the positive electrode film layer was reduced, the initial DCR of the battery was reduced, the capacity retention rate after cycling at high temperature was increased, and the volume swelling ratio after storage at high temperature was reduced. This was mainly because the migration path of the lithium ions in the positive electrode film layer was shortened, the kinetic performance of the battery was improved, and the initial DCR was reduced after the thickness of the positive electrode film layer was reduced. The surface of the positive electrode film layer using the olivine-structured lithium-containing phosphate included a polar functional group, had a large specific surface area, and was extremely easy to absorb water, but a drying process before solution injection into the battery could not completely remove the water from the positive electrode film layer. During the use of the battery, the water in the positive electrode film layer gradually diffused into the electrolyte and reacted with the electrolyte, and the water also damaged the SEI membrane on the surface of the negative electrode active material, thereby affecting the stability of the negative electrode interface. Therefore, when the thickness of the positive electrode film layer was reduced, water in the positive electrode film layer was also easier to remove in the drying process, damage caused by the water to the negative electrode interface was reduced, and further, decaying of the capacity of the battery after cycling at high temperature was slowed down, and gassing after storage at high temperature was decreased.

By comparing Examples 12 and 13, it could be learned that when the porosity of the positive electrode film layer was increased, the initial DCR of the battery was reduced, the capacity retention rate after cycling at high temperature was increased, and the volume swelling ratio after storage at high temperature was decreased. After the porosity of the positive electrode film layer was improved, it was easier for the electrolyte to infiltrate the positive electrode film layer, migration hindrance for the lithium ions in the positive electrode film layer was reduced, and therefore, the kinetic performance of the battery was improved, and the initial DCR was reduced After the porosity of the positive electrode film layer was improved, water in the positive electrode film layer was also easier to remove in the drying process, damage caused by the water to the negative electrode interface was reduced, and therefore, decaying of the capacity of the battery after cycling at high temperature was slowed down, and gassing after storage at high temperature was decreased.

By comparing Examples 16 to 17, it could be learned that after the proportion of the additive was increased, the initial DCR of the battery was increased, the capacity retention rate after cycling at high temperature was increased, and the volume swelling ratio after storage at high temperature was decreased. This was mainly because the proportion of additive consumed in a formation process was increased, a SEI membrane formed on the surface of the negative electrode active material was thickened, and membrane-forming impedance at the negative electrode was increased after the proportion of the additive in the battery was increased, and therefore, the initial DCR of the battery was increased. Correspondingly, after the proportion of the additive in the battery was increased, the SEI membrane better protected the negative electrode active material, the stability of the negative electrode interface was improved, and tolerance to a side effect caused by the first solvent was improved. Therefore, decaying of the capacity of the battery after cycling at high temperature was slowed down, and gassing after storage at high temperature was decreased.

By comparing Examples 18 to 21, it could be learned that when the relative mass of the negative electrode and the specific surface area of the negative electrode active material were reduced, the initial DCR of the battery was increased, the capacity retention rate after cycling at high temperature was increased, and the volume swelling ratio after storage at high temperature was decreased. This was mainly because the amount of additive required to form the SEI membrane on the surface of the negative electrode active material was reduced, the amount of additive required by the battery was greatly reduced, and there was more sufficient additive inside the battery after the relative mass of the negative electrode and the specific surface area of the negative electrode active material in the battery were reduced. Therefore, decaying of the capacity of the battery after cycling at high temperature was slowed down, and gassing after storage at high temperature was decreased. When the amount of additive required by the battery was reduced, there was excessively sufficient additive inside the battery, the amount of additive that can be consumed to form the SEI membrane on the surface of the negative electrode active material during formation was increased, and the SEI membrane formed was thicker. Therefore, the initial DCR of the battery was increased.

By comparing Examples 22 to 25, it could be learned that all kinetic performances of the electrolytes could satisfy total requirements of the positive electrode film layers for the kinetic performances of the electrolytes, and no initial DCRs of the batteries were great. However, when some parameters were changed, an amount of retained additive was less than the required amount of additive, the additive could not provide sufficient protection for the negative electrode interface, the first solvent participated in a side reaction at the negative electrode interface, and a specific amount of lithium ions were consumed. Therefore, decaying of the capacity of the battery after cycling at high temperature was accelerated. The first solvent also damaged the SEI membrane on the surface of the negative electrode active material, and as a result, the SEI membrane needed to be repaired continuously during the use of the battery, and a specific amount of gas was generated during the repair of the SEI membrane. Therefore, the volume swelling ratio of the battery after storage at high temperature was increased.

After the specific surface area of the negative electrode active material was increased, the amount of additive required to form the SEI membrane on the surface of the negative electrode active material was increased, and because a total amount of additive was constant, the SEI membrane formed on the surface of the negative electrode active material was thinner. Therefore, the initial DCR of the battery was decreased. However, in Example 22, because the specific surface area of the negative electrode active material was increased, an amount of retained additive was less than the required amount of additive, the additive could not sufficiently form the SEI membrane on the surface of the negative electrode active material, or provide sufficient protection for the negative electrode interface. Therefore, decaying of the capacity of the battery after cycling at high temperature was significantly accelerated, and the volume swelling ratio after storage at high temperature was significantly increased.

After the proportion of the additive was reduced, the amount of additive that can be used to form the SEI membrane on the surface of the negative electrode active material was relatively reduced, and membrane-forming impedance at the negative electrode was reduced. Therefore, the initial DCR of the battery was decreased. However, in Example 23, because the proportion of the additive was reduced, an amount of retained additive was less than the required amount of additive, and the additive could not sufficiently form the SEI membrane on the surface of the negative electrode active material, or provide sufficient protection for the negative electrode interface. Therefore, decaying of the capacity of the battery after cycling at high temperature was significantly accelerated, and the volume swelling ratio after storage at high temperature was significantly increased.

After the electrolyte retention coefficient of the battery was reduced, the amount of additive that can be used to form the SEI membrane on the surface of the negative electrode active material was relatively reduced, and membrane-forming impedance at the negative electrode was reduced. Therefore, the initial DCR of the battery was decreased. However, in Example 24, because the electrolyte retention coefficient was reduced, an amount of retained additive was less than the required amount of additive, and in this case, the additive could not provide sufficient protection for the negative electrode interface. Therefore, decaying of the capacity of the battery after cycling at high temperature was significantly accelerated, and the volume swelling ratio after storage at high temperature was significantly increased.

After the relative mass of the negative electrode was increased, because a total amount of additive was constant, the SEI membrane formed on the surface of the negative electrode active material was thinner. Therefore, the initial DCR of the battery was decreased. However, in Example 25, because the relative mass of the negative electrode was increased, an amount of retained additive was less than the required amount of additive, the additive could not sufficiently form the SEI membrane on the surface of the negative electrode active material, or provide sufficient protection for the negative electrode interface. Therefore, decaying of the capacity of the battery after cycling at high temperature was significantly accelerated, and the volume swelling ratio after storage at high temperature was significantly increased.

The examples 26-30 do not form part of the current invention. By comparing Examples 26 to 28, it could be learned that when each amount of retained additive was greater than the required amount of additive, even if the electrolyte included the first solvent, the negative electrode interface could still be effectively protected. Therefore, the battery still had a high capacity retention rate after cycling at high temperature and a low volume swelling ratio after storage at high temperature. However, when some parameters were changed, kinetic performance of the electrolyte could not satisfy a total requirement of the positive electrode film layer for the kinetic performance of the electrolyte, and the initial DCR of the battery was significantly increased.

In Example 26, because the proportion of the first solvent was reduced, kinetic performance of the electrolyte could not satisfy a total requirement of the positive electrode film layer for the kinetic performance of the electrolyte, kinetic performance of the electrolyte and the battery could not be effectively increased, and the initial DCR of the battery was significantly increased.

The thickness of the positive electrode film layer was increased, and the energy density of the battery was increased. However, in Example 27, because the thickness of the positive electrode film layer was increased, kinetic performance of the electrolyte could not satisfy a total requirement of the positive electrode film layer for the kinetic performance of the electrolyte, a migration path of the lithium ions in the positive electrode film layer was extended, and the initial DCR of the battery was significantly increased.

The porosity of the positive electrode film layer was reduced, and the energy density of the battery was increased. However, in Example 28, because the porosity of the positive electrode film layer was reduced, kinetic performance of the electrolyte could not satisfy a total requirement of the positive electrode film layer for the kinetic performance of the electrolyte, it was harder for the electrolyte to infiltrate the positive electrode film layer, migration hindrance for the lithium ions in the positive electrode film layer was increased, and therefore, the initial DCR of the battery was significantly increased.

By comparing Examples 29 and 30, it could be learned that the battery had a high initial DCR, a low capacity retention rate after cycling at high temperature, and a high volume swelling ratio after storage at high temperature. This was mainly because the thickness of the positive electrode film layer was increased, the porosity was reduced, it was harder for the electrolyte to infiltrate the positive electrode film layer, the migration path of the lithium ions was extended, migration hindrance was increased, the kinetic performance of the electrolyte could not satisfy the total requirement of the positive electrode film layer for the kinetic performance of the electrolyte, and therefore, the initial DCR of the battery was higher; and the proportion of the additive in the electrolyte was lower, an amount of retained additive was less than the required amount of additive, the additive could not provide sufficient protection for the negative electrode interface, and therefore, decaying of the capacity of the battery after cycling at high temperature was accelerated, and gassing after storage at high temperature was increased.

By comparing Examples 14 and 15, it could be further learned that the mass percentage of the lithium salt was increased, the initial DCR of the battery was first decreased and then increased, and this was mainly caused by a change in conductivity of the electrolyte. The conductivity of the electrolyte depended on a total quantity of lithium ions that can be migrated and the migration rate of the lithium ions, the mass percentage of the lithium salt was increased, and the total quantity of lithium ions that can be migrated was increased, but viscosity of the electrolyte was also increased, and the migration rate of the lithium ions was reduced. Therefore, there was an optimum value for the mass percentage of the lithium salt, and therefore, the initial DCR of the battery was the lowest. The higher the mass percentage of lithium salt, the lower the proportion of free organic solvent in the electrolyte, and the lower the proportion of the first solvent that participated in the side reaction at the negative electrode interface. Therefore, decaying of the capacity of the battery after cycling at high temperature was slowed down, and gassing after storage at high temperature was decreased.

It could be learned from data in Table 3 that, in Examples 1 to 22, when the batteries satisfied that a mass of the first solvent divided by the rated capacity of the secondary battery was greater than or equal to 0.7 g/Ah and a mass of the electrolyte divided by the rated capacity of the secondary battery was less than or equal to 3.5 g/Ah, and further satisfied Formula I and Formula II, the batteries could have low initial DCRs, high capacity retention rates after cycling at high temperature, and low volume swelling ratios after storage at high temperature. Kinetic performance of the electrolyte could satisfy a total requirement of the positive electrode film layer for the kinetic performance of the electrolyte, and therefore, the battery had a lower initial DCR. In addition, the additive in the electrolyte could effectively protect the negative electrode interface and suppress an aggravation problem of a side reaction at the negative electrode interface caused due to the instability of the first solvent, and therefore, decaying of the capacity of the battery after cycling at high temperature was slowed down, and gassing after storage at high temperature was decreased.

It should be noted that this application is not limited to the foregoing embodiments. The foregoing embodiments are merely used as examples, and embodiments with a substantially identical technical concept and same functions within the scope of the technical solution in this application all fall into the technical scope of the appended claim set.

## Claims

1. A secondary battery (5), comprising a positive electrode plate and an electrolyte, wherein
the positive electrode plate comprises a positive electrode current collector and a positive electrode film layer arranged on at least one surface of the positive electrode current collector, and the positive electrode film layer comprises one or more of lithium iron phosphate, a composite material of lithium iron phosphate and carbon, lithium manganese phosphate, a composite material of lithium manganese phosphate and carbon, lithium manganese iron phosphate, a composite material of lithium manganese iron phosphate and carbon and their respective modified compounds;
the electrolyte comprises an organic solvent, and the organic solvent comprises a first solvent represented by Formula 1; 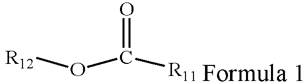
R₁₁ and R₁₂ in Formula 1 each are independently one of C1-C4 alkyl and C1-C4 haloalkyl; and
the secondary battery (5) satisfies:
mass of first solvent/rated capacity of secondary battery (5) is ≥ 0.7 g/Ah, and optionally, is ≥ 1.0 g/Ah; and
mass of electrolyte/rated capacity of secondary battery (5) is ≤ 3.5 g/Ah, and optionally, ranges from 2.8 g/Ah to 3.3 g/Ah;
wherein the secondary battery (5) further satisfies: proportion of first solvent/(thickness of positive electrode film layer × 3 + 0.008/porosity of positive electrode film layer) is ≥ 1,
the proportion of the first solvent refers to a mass percentage of the first solvent in a total mass of the organic solvent; and
the thickness of the positive electrode film layer is a thickness of a positive electrode film layer on one surface of the positive electrode current collector, which is measured in mm.

2. The secondary battery according to claim 1, wherein the secondary battery (5) further satisfies: proportion of first solvent/(thickness of positive electrode film layer × 3 + 0.008/porosity of positive electrode film layer) is ≥ 1.5;
the proportion of the first solvent refers to a mass percentage of the first solvent in a total mass of the organic solvent; and
the thickness of the positive electrode film layer is a thickness of a positive electrode film layer on one surface of the positive electrode current collector, which is measured in mm.

3. The secondary battery (5) according to claim 1 or 2, wherein the electrolyte further comprises an additive, and reduction potential of the additive is greater than or equal to 0.8 V vs Li⁺/Li.

4. The secondary battery (5) according to claim 3, wherein the additive comprises an organic additive, and the organic additive comprises one or more of vinylene carbonate, fluoroethylene carbonate, vinyl ethylene carbonate, ethylene sulfate, and 1,3-propane sultone;
and/or
wherein the additive comprises an inorganic additive, and the inorganic additive comprises one or more of tris(trimethylsilyl) phosphate, lithium bis(oxalate)borate, lithium bis[ethanedioato(2-)-κO1,κO2]difluorophosphate(1-), lithium tetrafluoro(oxalato)phosphate, lithium difluoro(oxalato)borate, and lithium difluorophosphate.

5. The secondary battery (5) according to claim 4, wherein a mass percentage of the organic additive in a total mass of the additive is greater than or equal to 50%, and optionally, ranges from 70% to 100%;
and/or
wherein a mass percentage of the inorganic additive in the total mass of the additive is less than or equal to 50%, and optionally, ranges from 0% to 30%.

6. The secondary battery (5) according to any one of claims 1 to 5, wherein
the secondary battery (5) further comprises a negative electrode plate, the negative electrode plate comprises a negative electrode active material, and the secondary battery (5) further satisfies: (electrolyte retention coefficient × proportion of additive)/(relative mass of negative electrode × specific surface area of negative electrode active material × 0.012 + electrolyte retention coefficient × proportion of first solvent × 0.03) is ≥ 1, and optionally, (electrolyte retention coefficient × proportion of additive)/(relative mass of negative electrode × specific surface area of negative electrode active material × 0.012 + electrolyte retention coefficient × proportion of first solvent × 0.03) is ≥ 2;
the electrolyte retention coefficient refers to a quotient calculated by dividing the mass of the electrolyte by the rated capacity of the secondary battery (5), and is measured in g/Ah;
the proportion of the additive refers to a mass percentage of the additive in a total mass of the electrolyte;
the relative mass of the negative electrode refers to a quotient calculated by dividing the mass of the negative electrode active material in the negative electrode plate by the rated capacity of the secondary battery (5), and is measured in g/Ah; and
the specific surface area of the negative electrode active material is measured in m²/g.

7. The secondary battery (5) according to any one of claims 1 to 6, wherein the thickness of the positive electrode film layer is greater than or equal to 0.07 mm, and optionally, ranges from 0.07 mm to 0.14 mm; and/or
the porosity of the positive electrode film layer is less than or equal to 50%, and optionally, ranges from 5% to 50%.

8. The secondary battery (5) according to any one of claims 1 to 7, wherein the relative mass of the negative electrode is less than or equal to 2.1 g/Ah, and optionally, ranges from 1.2 g/Ah to 2.1 g/Ah; and/or
the specific surface area of the negative electrode active material ranges from 0.5 m²/g to 6.0 m²/g, and optionally, from 1.0 m²/g to 3.2 m²/g; and/or
the proportion of the additive is greater than or equal to 3%, and optionally, ranges from 3% to 9%.

9. The secondary battery (5) according to any one of claims 1 to 8, wherein the proportion of the first solvent is greater than or equal to 50%, and optionally, ranges from 50% to 80%.

10. The secondary battery (5) according to any one of claims 1 to 9, wherein R₁₁ and R₁₂ in Formula 1 each are independently one of methyl, ethyl, propyl, butyl, fluoromethyl, fluoroethyl, fluoropropyl, and fluorobutyl.

11. The secondary battery (5) according to any one of claims 1 to 10, wherein the first solvent represented by Formula 1 is selected from one or more of the following compounds: 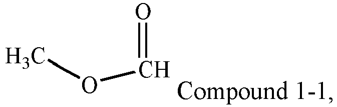 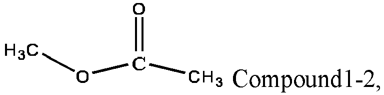 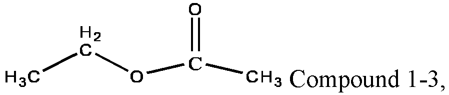 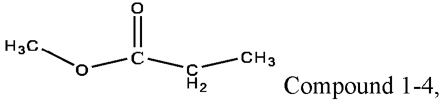 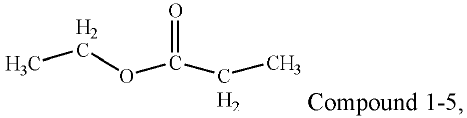 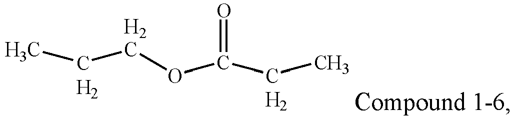 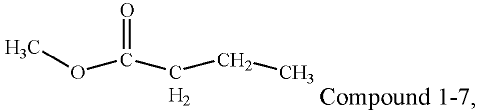 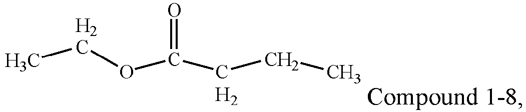 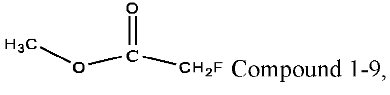 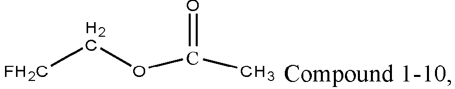 and

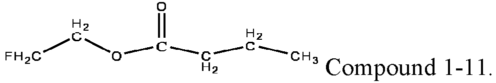

12. The secondary battery (5) according to any one of claims 1 to 11, wherein the organic solvent further comprises one or more of a second solvent represented by Formula 2 and a third solvent represented by Formula 3, R₂₁ in Formula 2 is one of H, methyl, and ethyl, and R₃₁ and R₃₂ in Formula 3 each are independently one of methyl, ethyl, and propyl; 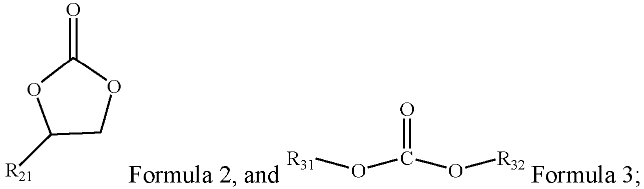
optionally, the second solvent represented by Formula 2 is selected from one or two of the following compounds: 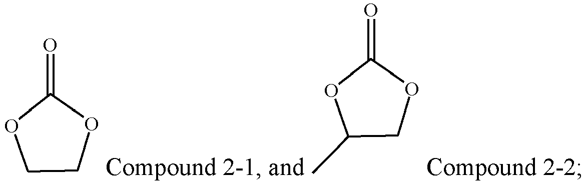 and
optionally, the third solvent represented by Formula 3 is selected from one or more of the following compounds: 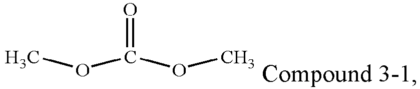 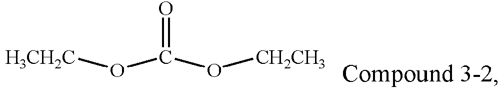 and 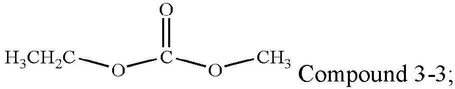 and
wherein preferably, a mass percentage of the second solvent in a total mass of the organic solvent is greater than or equal to 10%, and optionally, ranges from 10% to 80%; and/or
a mass percentage of the third solvent in the total mass of the organic solvent is greater than or equal to 0%, and optionally, ranges from 5% to 80%.

13. A battery pack (1), comprising one of the secondary battery (5) according to any one of claims 1 to 12.

14. An electric apparatus, comprising at least one of the secondary battery (5) according to any one of claims 1 to 12 and the battery pack according (1) to claim 13.

## Patentansprüche

1. Sekundärbatterie (5), umfassend eine Positivelektrodenplatte und einen Elektrolyten, wobei
die Positivelektrodenplatte einen Positivelektroden-Stromkollektor und eine Positivelektroden-Filmschicht, die auf mindestens einer Oberfläche des Positivelektroden-Stromkollektors angeordnet ist, umfasst, und wobei die Positivelektroden-Filmschicht ein oder mehrere von Lithiumeisenphosphat, einem Verbundmaterial von Lithiumeisenphosphat und Kohle, Lithiummanganphosphat, einem Verbundmaterial von Lithiummanganphosphat und Kohle, Lithiummanganeisenphosphat, einem Verbundmaterial von Lithiummanganeisenphosphat und Kohle und deren jeweilige modifizierte Verbindungen umfasst;
der Elektrolyt ein organisches Lösungsmittel umfasst, und das organische Lösungsmittel ein erstes Lösungsmittel umfasst, das durch Formel 1 wiedergegeben wird: 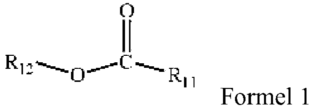
wobei R₁₁ und R₁₂ in Formel 1 jeweils unabhängig eines von C₁-C₄-Alkyl und C₁-C₄-Halogenalkyl sind; und
die Sekundärbatterie (5) folgendes erfüllt:
Masse des ersten Lösungsmittels/Nennkapazität der Sekundärbatterie (5) ist ≥ 0,7 g/Ah und ist gegebenenfalls ≥ 1,0 g/Ah; und
Masse des Elektrolyten/Nennkapazität der Sekundärbatterie (5) ist ≤ 3,5 g/Ah und liegt gegebenenfalls im Bereich von 2,8 g/Ah bis 3,3 g/Ah;
wobei die Sekundärbatterie (5) des Weiteren erfüllt: Anteil von erstem Lösungsmittel/(Dicke der Positivelektroden-Filmschicht x 3 + 0,008/Porosität der Positivelektroden-Filmschicht) ist ≥ 1, wobei der Anteil des ersten Lösungsmittels sich auf einen Massenprozentsatz des ersten Lösungsmittels in einer Gesamtmasse des organischen Lösungsmittels bezieht; und
die Dicke der Positivelektroden-Filmschicht eine Dicke einer Positivelektroden-Filmschicht auf einer Oberfläche des Positivelektroden-Stromkollektors ist, die in mm gemessen wird.

2. Sekundärbatterie nach Anspruch 1, wobei die Sekundärbatterie (5) des Weiteren erfüllt:
Anteil von erstem Lösungsmittel/(Dicke der Positivelektroden-Filmschicht x 3 + 0,008/Porosität der Positivelektroden-Filmschicht) ist ≥ 1,5;
wobei der Anteil des ersten Lösungsmittels sich auf einen Massenprozentsatz des ersten Lösungsmittels in einer Gesamtmasse des organischen Lösungsmittels bezieht; und
die Dicke der Positivelektroden-Filmschicht eine Dicke einer Positivelektroden-Filmschicht auf einer Oberfläche des Positivelektroden-Stromkollektors ist, die in mm gemessen wird.

3. Sekundärbatterie (5) nach Anspruch 1 oder 2, wobei der Elektrolyt des Weiteren ein Additiv umfasst und das Reduktionspotential des Additivs größer als oder gleich 0,8 V gegen Li⁺/Li ist.

4. Sekundärbatterie (5) nach Anspruch 3, wobei das Additiv ein organisches Additiv umfasst, und das organische Additiv ein oder mehrere von Vinylencarbonat, Fluorethylencarbonat, Vinylethylencarbonat, Ethylensulfat und 1,3-Propansulton umfasst;
und/oder
wobei das Additiv ein anorganisches Additiv umfasst, und das anorganische Additiv ein oder mehrere von Tris(trimethylsilyl)phosphat, Lithiumbis(oxalat)borat, Lithiumbis[ethandioato(2-)-κO1,κO2]difluorphosphat(1-), Lithiumtetrafluor(oxalato)phosphat, Lithiumdifluor(oxalato)borat und Lithiumdifluorphosphat umfasst.

5. Sekundärbatterie (5) nach Anspruch 4, wobei ein Massenprozentsatz des organischen Additivs in einer Gesamtmasse des Additivs größer als oder gleich 50 % ist und gegebenenfalls im Bereich von 70 % bis 100 % liegt;
und/oder
wobei ein Massenprozentsatz des anorganischen Additivs in der Gesamtmasse des Additivs kleiner als oder gleich 50 % ist und gegebenenfalls im Bereich von 0 % bis 30 % liegt.

6. Sekundärbatterie (5) nach einem der Ansprüche 1 bis 5, wobei
die Sekundärbatterie (5) des Weiteren eine Negativelektrodenplatte umfasst, wobei die Negativelektrodenplatte ein Negativelektroden-Aktivmaterial umfasst, und wobei die Sekundärbatterie (5) des Weiteren erfüllt: (Elektrolytretentionskoeffizient x Anteil an Additiv)/(relative Masse der Negativelektrode x spezifische Oberfläche des Negativelektroden-Aktivmaterials x 0,012 + Elektrolytretentionskoeffizient x Anteil an erstem Lösungsmittel x 0,03) ist ≥ 1, und gegebenenfalls ist (Elektrolytretentionskoeffizient x Anteil an Additiv)/(relative Masse der Negativelektrode x spezifische Oberfläche des Negativelektroden-Aktivmaterials x 0,012 + Elektrolytretentionskoeffizient x Anteil an erstem Lösungsmittel x 0,03) ≥ 2;
wobei sich der Elektrolytretentionskoeffizient auf einen Quotienten bezieht, der berechnet wird, indem die Masse des Elektrolyten durch die Nennkapazität der Sekundärbatterie (5) geteilt wird, und in g/Ah gemessen wird;
wobei der Anteil des Additivs sich auf einen Massenprozentsatz des Additivs in einer Gesamtmasse des Elektrolyten bezieht;
wobei sich die relative Masse der Negativelektrode auf einen Quotienten bezieht, der berechnet wird, indem die Masse des Negativelektroden-Aktivmaterials in der Negativelektrodenplatte durch die Nennkapazität der Sekundärbatterie (5) geteilt wird, und in g/Ah gemessen wird; und
die spezifische Oberfläche des Negativelektroden-Aktivmaterials in m²/g gemessen wird.

7. Sekundärbatterie (5) nach einem der Ansprüche 1 bis 6, wobei die Dicke der Positivelektroden-Filmschicht größer als oder gleich 0,07 mm ist und gegebenenfalls im Bereich von 0,07 mm bis 0,14 mm liegt;
die Porosität der Positivelektroden-Filmschicht kleiner als oder gleich 50 % ist und gegebenenfalls im Bereich von 5 % bis 50 % liegt.

8. Sekundärbatterie (5) nach einem der Ansprüche 1 bis 7, wobei die relative Masse der Negativelektrode kleiner als oder gleich 2,1 g/Ah ist und gegebenenfalls im Bereich von 1,2 g/Ah bis 2,1 g/Ah liegt; und/oder
die spezifische Oberfläche des Negativelektroden-Aktivmaterials im Bereich von 0,5 m²/g bis 6,0 m²/g und gegebenenfalls 1,0 m²/g bis 3,2 m²/g liegt; und/oder
der Anteil des Additivs größer als oder gleich 3 % ist und gegebenenfalls im Bereich von 3 % bis 9 % liegt.

9. Sekundärbatterie (5) nach einem der Ansprüche 1 bis 8, wobei der Anteil des ersten Lösungsmittels größer als oder gleich 50 % ist und gegebenenfalls im Bereich von 50 % bis 80 % liegt.

10. Sekundärbatterie (5) nach einem der Ansprüche 1 bis 9, wobei R₁₁ und R₁₂ in Formel 1 jeweils unabhängig eines von Methyl, Ethyl, Propyl, Butyl, Fluormethyl, Fluorethyl, Fluorpropyl und Fluorbutyl sind.

11. Sekundärbatterie (5) nach einem der Ansprüche 1 bis 10, wobei das erste Lösungsmittel, welches durch Formel 1 repräsentiert wird, ausgewählt ist aus einer oder mehreren der folgenden Verbindungen: 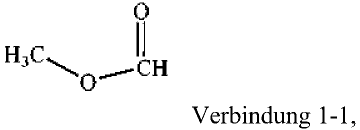 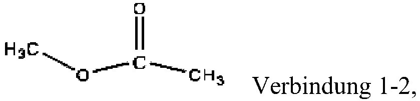 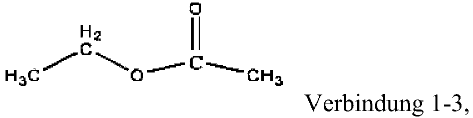 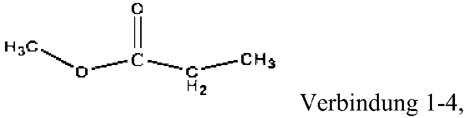 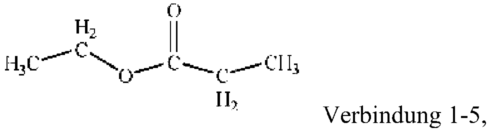 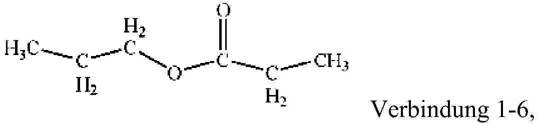 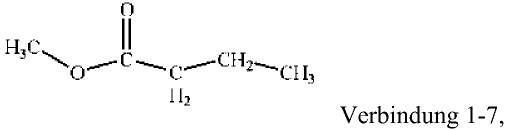 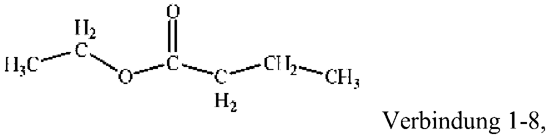 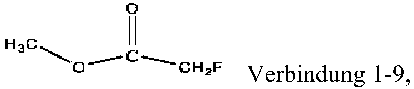 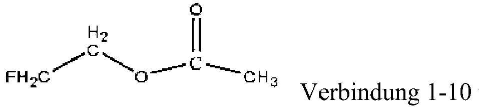 und

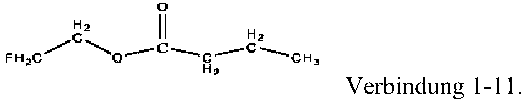

12. Sekundärbatterie (5) nach einem der Ansprüche 1 bis 11, wobei das organische Lösungsmittel des Weiteren ein oder mehreren von einem zweiten Lösungsmittel, das durch Formel 2 repräsentiert wird, und einem dritten Lösungsmittel, das durch Formel 3 repräsentiert wird, umfasst, wobei R₂₁ in Formel 2 eines von H, Methyl und Ethyl ist, und R₃₁ und R₃₂ in Formel 3 jeweils unabhängig eines von Methyl, Ethyl und Propyl sind; 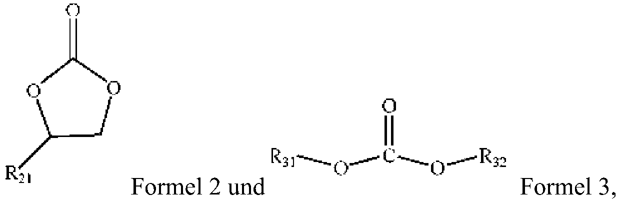
wobei das zweite Lösungsmittel, das durch Formel 2 repräsentiert wird, gegebenenfalls ausgewählt ist aus einer oder zwei der folgenden Verbindungen: 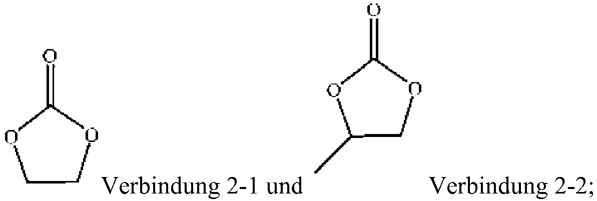 und
wobei das dritte Lösungsmittel, das durch Formel 3 repräsentiert wird, gegebenenfalls ausgewählt ist aus einer oder mehreren der folgenden Verbindungen: 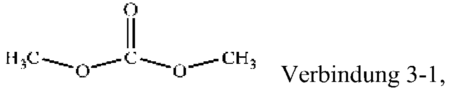 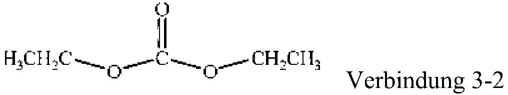 und 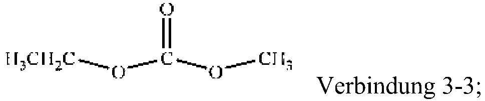 und
wobei vorzugsweise ein Massenprozentsatz des zweiten Lösungsmittels in der Gesamtmasse des organischen Lösungsmittels größer als oder gleich 10 % ist und gegebenenfalls im Bereich von 10 % bis 80 % liegt; und/oder
ein Massenprozentsatz des dritten Lösungsmittels in der Gesamtmasse des organischen Lösungsmittels größer als oder gleich 0 % ist und gegebenenfalls im Bereich von 5 % bis 80 % liegt.

13. Batteriepack (1), umfassend eine von der Sekundärbatterie (5) gemäß einem der Ansprüche 1 bis 12.

14. Elektrisches Gerät, umfassend mindestens eines von der Sekundärbatterie (5) gemäß einem der Ansprüche 1 bis 12 und dem Batteriepack (1) gemäß Anspruch 13.

## Revendications

1. Batterie rechargeable (5), comprenant une plaque d'électrode positive et un électrolyte, la plaque d'électrode positive comprenant un collecteur de courant d'électrode positive et une couche de film d'électrode positive disposée sur au moins une surface du collecteur de courant d'électrode positive, et la couche de film d'électrode positive comprenant un ou plusieurs matériaux parmi le phosphate de lithium-fer, un matériau composite de phosphate de lithium-fer et de carbone, le phosphate de lithium-manganèse, un matériau composite de phosphate de lithium-manganèse et de carbone, le phosphate de lithium-manganèse-fer, un matériau composite de phosphate de lithium-manganèse-fer et de carbone, et leurs composés modifiés respectifs ;
l'électrolyte comprenant un solvant organique, et le solvant organique comprenant un premier solvant représenté par la formule 1 ; 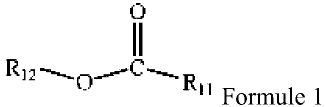
R₁₁ et R₁₂ dans la formule 1 représentant chacun indépendamment un groupe alkyle en C₁-C₄ ou halogénoalkyle en C₁-C₄ ; et
la batterie rechargeable (5) satisfaisant les conditions suivantes :
le rapport masse du premier solvant/capacité nominale de la batterie rechargeable (5) est ≥ 0,7 g/Ah, et éventuellement est ≥ 1,0 g/Ah ; et
le rapport masse de l'électrolyte/capacité nominale de la batterie rechargeable (5) est ≤ 3,5 g/Ah, et éventuellement va de 2,8 g/Ah à 3,3 g/Ah ;
la batterie rechargeable (5) satisfaisant en outre la condition suivante : le rapport proportion du premier solvant/(épaisseur de la couche de film d'électrode positive × 3 + 0,008/porosité de la couche de film d'électrode positive) est ≥ 1,
la proportion du premier solvant faisant référence à un pourcentage massique du premier solvant par rapport à une masse totale du solvant organique ; et
l'épaisseur de la couche de film d'électrode positive étant une épaisseur d'une couche de film d'électrode positive sur une surface du collecteur de courant d'électrode positive, qui est mesurée en mm.

2. Batterie rechargeable selon la revendication 1, la batterie rechargeable (5) satisfaisant en outre la condition suivante : le rapport proportion du premier solvant/(épaisseur de la couche de film d'électrode positive × 3 + 0,008/porosité de la couche de film d'électrode positive) est ≥ 1,5 ;
la proportion du premier solvant faisant référence à un pourcentage massique du premier solvant par rapport à une masse totale du solvant organique ; et
l'épaisseur de la couche de film d'électrode positive étant une épaisseur d'une couche de film d'électrode positive sur une surface du collecteur de courant d'électrode positive, qui est mesurée en mm.

3. Batterie rechargeable (5) selon la revendication 1 ou 2, dans laquelle l'électrolyte comprend en outre un additif, et le potentiel de réduction de l'additif est supérieur ou égal à 0,8 V par rapport à Li⁺/Li.

4. Batterie rechargeable (5) selon la revendication 3, dans laquelle l'additif comprend un additif organique, et l'additif organique comprend un ou plusieurs composés parmi le carbonate de vinylène, le carbonate de fluoroéthylène, le carbonate de vinyléthylène, le sulfate d'éthylène, et la 1,3-propanesultone ;
et/ou
dans laquelle l'additif comprend un additif inorganique, et l'additif inorganique comprend un ou plusieurs composés parmi le phosphate de tris(triméthylsilyle), le bis(oxalato)borate de lithium, le bis[éthanedioato(2-)-kO1,kO2]difluorophosphate(1-) de lithium, le tétrafluoro(oxalato)phosphate de lithium, le difluoro(oxalato)borate de lithium, et le difluorophosphate de lithium.

5. Batterie rechargeable (5) selon la revendication 4, dans laquelle un pourcentage massique de l'additif organique par rapport à une masse totale de l'additif est supérieur ou égal à 50 %, et éventuellement va de 70 % à 100 % ;
et/ou
dans laquelle un pourcentage massique de l'additif inorganique par rapport à la masse totale de l'additif est inférieur ou égal à 50 %, et éventuellement va de 0 % à 30 %.

6. Batterie rechargeable (5) selon l'une quelconque des revendications 1 à 5,
la batterie rechargeable (5) comprenant en outre une plaque d'électrode négative, la plaque d'électrode négative comprenant un matériau actif d'électrode négative, et la batterie rechargeable (5) satisfaisant en outre la condition suivante : le rapport (coefficient de rétention de l'électrolyte × proportion de l'additif)/(masse relative de l'électrode négative × surface spécifique du matériau actif d'électrode négative × 0,012 + coefficient de rétention de l'électrolyte × proportion du premier solvant × 0,03) est ≥ 1, et éventuellement le rapport (coefficient de rétention de l'électrolyte × proportion de l'additif)/(masse relative de l'électrode négative × surface spécifique du matériau actif d'électrode négative × 0,012 + coefficient de rétention de l'électrolyte × proportion du premier solvant × 0,03) est ≥ 2 ;
le coefficient de rétention de l'électrolyte faisant référence à un quotient calculé en divisant la masse de l'électrolyte par la capacité nominale de la batterie rechargeable (5), et est mesuré en g/Ah ;
la proportion de l'additif faisant référence à un pourcentage massique de l'additif par rapport à une masse totale de l'électrolyte ;
la masse relative de l'électrode négative faisant référence à un quotient calculé en divisant la masse du matériau actif d'électrode négative dans la plaque d'électrode négative par la capacité nominale de la batterie rechargeable (5), et est mesurée en g/Ah ; et
la surface spécifique du matériau actif d'électrode négative étant mesurée en m²/g.

7. Batterie rechargeable (5) selon l'une quelconque des revendications 1 à 6, dans laquelle l'épaisseur de la couche de film d'électrode positive est supérieure ou égale à 0,07 mm, et éventuellement va de 0,07 mm à 0,14 mm ; et/ou
la porosité de la couche de film d'électrode positive est inférieure ou égale à 50 %, et éventuellement va de 5 % à 50 %.

8. Batterie rechargeable (5) selon l'une quelconque des revendications 1 à 7, dans laquelle la masse relative de l'électrode négative est inférieure ou égale à 2,1 g/Ah, et éventuellement va de 1,2 g/Ah à 2,1 g/Ah ; et/ou
la surface spécifique du matériau actif d'électrode négative va de 0,5 m²/g à 6,0 m²/g, et éventuellement de 1,0 m²/g à 3,2 m²/g ; et/ou
la proportion de l'additif est supérieure ou égale à 3 %, et éventuellement va de 3 % à 9 %.

9. Batterie rechargeable (5) selon l'une quelconque des revendications 1 à 8, dans laquelle la proportion du premier solvant est supérieure ou égale à 50 %, et éventuellement va de 50 % à 80 %.

10. Batterie rechargeable (5) selon l'une quelconque des revendications 1 à 9, dans laquelle R₁₁ et R₁₂ dans la formule 1 représentent chacun indépendamment un groupe méthyle, éthyle, propyle, butyle, fluorométhyle, fluoroéthyle, fluoropropyle, ou fluorobutyle.

11. Batterie rechargeable (5) selon l'une quelconque des revendications 1 à 10, dans laquelle le premier solvant représenté par la formule 1 est choisi parmi un ou plusieurs des composés suivants : 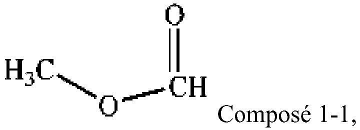 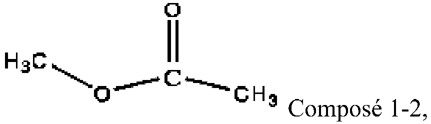 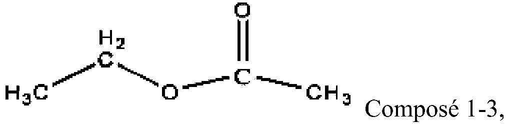 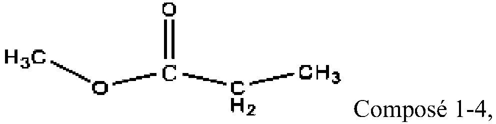 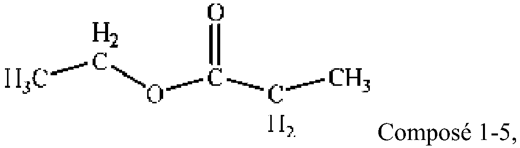 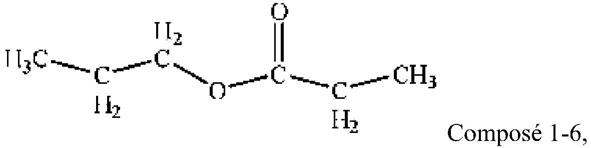 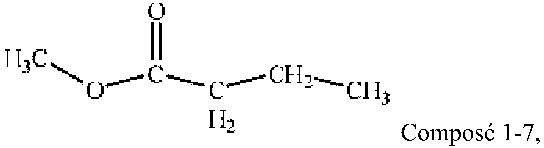 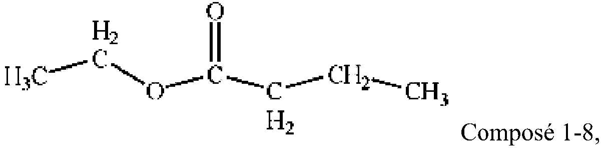 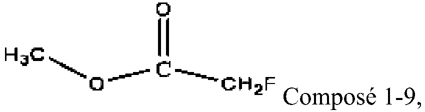 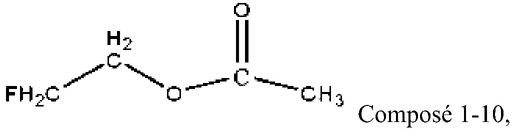 et

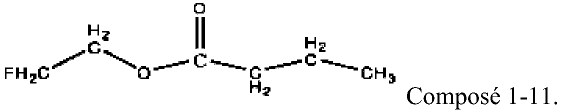

12. Batterie rechargeable (5) selon l'une quelconque des revendications 1 à 11, dans laquelle le solvant organique comprend en outre un deuxième solvant représenté par la formule 2 et/ou un troisième solvant représenté par la formule 3, R₂₁ dans la formule 2 représente H, un méthyle ou un éthyle, et R₃₁ et R₃₂ dans la formule 3 représentent chacun indépendamment un groupe méthyle, éthyle ou propyle ; 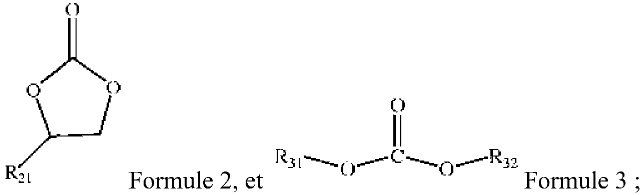
éventuellement, le deuxième solvant représenté par la formule 2 est choisi parmi un des composés suivants ou les deux : 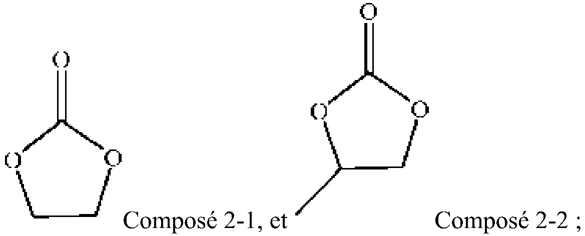 et
éventuellement, le troisième solvant représenté par la formule 3 est choisi parmi un ou plusieurs des composés suivants : 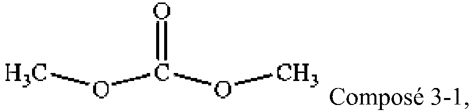 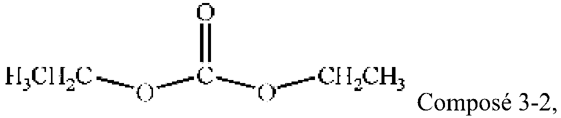 et 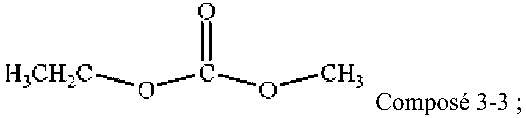 et
de préférence dans laquelle un pourcentage massique du deuxième solvant par rapport à une masse totale du solvant organique est supérieur ou égal à 10 %, et éventuellement va de 10 % à 80 % ; et/ou
un pourcentage massique du troisième solvant par rapport à la masse totale du solvant organique est supérieur ou égal à 0 %, et éventuellement va de 5 % à 80 %.

13. Bloc-batterie (1), comprenant la batterie rechargeable (5) selon l'une quelconque des revendications 1 à 12.

14. Appareil électrique, comprenant la batterie rechargeable (5) selon l'une quelconque des revendications 1 à 12 et/ou le bloc-batterie (1) selon la revendication 13.
